(19) Europäisches Patentamt
European Patent Office
Office européen des brevets

(11) **EP 4 722 302 A2**

(12) **EUROPEAN PATENT APPLICATION**

(43) Date of publication:
08.04.2026 Bulletin 2026/15

(21) Application number: 25222141.1

(22) Date of filing: 10.12.2025

(51) International Patent Classification (IPC):
*C09D 7/63* (2018.01)    *C09D 7/65* (2018.01)
*C09D 5/00* (2006.01)    *C09D 1/00* (2006.01)
*C09D 127/16* (2006.01)    *H01M 50/414* (2021.01)
*C09D 5/23* (2006.01)    *H01M 4/00* (2006.01)

(52) Cooperative Patent Classification (CPC):
(C-Sets available)
**C09D 5/00; C09D 1/00; C09D 7/63; C09D 7/65;
C09D 127/16; H01M 10/0525; H01M 50/414;
H01M 50/449;** C08K 5/34922; C08K 5/34928;
Y02E 60/10                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.12.2024   CN 202411804176**

(71) Applicant: **Ningde Amperex Technology Limited
Ningde, Fujian 352100 (CN)**

(72) Inventor: **WEN, Xiaodong
Ningde City, 352100 (CN)**

(74) Representative: **Kraus & Lederer PartGmbB
Thomas-Wimmer-Ring 15
80539 München (DE)**

(54) **COATING COMPOSITION, ELECTROCHEMICAL DEVICE CONTAINING SAME, AND ELECTRONIC DEVICE**

(57)    An coating composition includes a modified melamine salt and a binder. An endothermic temperature of the modified melamine salt is lower than an endothermic temperature of an unmodified melamine salt as characterized by a differential scanning calorimetry curve. A difference between the two endothermic temperatures is $\Delta t$, $5\,°C \le \Delta t \le 100\,°C$. This configuration enables the electrochemical device to exhibit excellent high-temperature storage performance and mechanical safety performance.

FIG. 1

EP 4 722 302 A2

(52) Cooperative Patent Classification (CPC): (Cont.)

C-Sets
**C09D 127/16, C08K 5/34928**

**Description**

**TECHNICAL FIELD**

This application relates to the field of electrochemical technology, and in particular, to a coating composition, an electrochemical device containing same, and an electronic device.

**BACKGROUND**

By virtue of a high energy storage density, a high open-circuit voltage, a low selfdischarge rate, a long cycle life, high safety and other advantages, electrochemical devices (such as a lithium-ion battery) are widely used in various fields such as electrical energy storage, mobile electronic devices, electric vehicles, and aerospace. As mobile electronic devices and electric vehicles come to a phase of rapid development, increasingly higher demands are placed on the energy density, safety performance, and other aspects of electrochemical devices in the market. However, an electrochemical device is usually prone to explosion when subjected to heat exposure, penetration, collision, impact, and the like, and the safety performance still needs to be improved.

In existing technologies, a coating layer that includes inactive materials such as aluminum oxide, boehmite, barium sulfate, and magnesium oxide is typically disposed on a surface of a separator to reduce the probability of overheating and explosion of the electrochemical device. However, when such inactive materials are used in the coating layer, the separator does not play a role in the transport of lithium ions and electrons within a positive electrode plate, thereby resulting in poor stability of the electrochemical device, and consequently affecting high-temperature storage performance and mechanical safety performance of the electrochemical device. Currently, market demand for electrochemical devices with excellent high-temperature storage performance and mechanical safety performance is increasing.

**SUMMARY**

An objective of this application is to provide a coating composition, an electrochemical device containing same, and an electronic device to improve high-temperature storage performance and mechanical safety performance of the electrochemical device.

It is hereby noted that in the subject-matter hereof, this application is construed by using a lithium-ion battery as an example of an electrochemical device, but the electrochemical device according to this application is not limited to the lithium-ion battery. Specific technical solutions are as follows:

A first aspect of this application provides a coating composition. The coating composition includes a modified melamine salt and a binder. An endothermic temperature of the modified melamine salt is lower than an endothermic temperature of an unmodified melamine salt as characterized by a differential scanning calorimetry (DSC) curve. A difference between the two endothermic temperatures is $\Delta t$, $5\,°C \leq \Delta t \leq 100\,°C$. Compared to the unmodified melamine salt, the modified melamine salt exhibits a lower endothermic temperature, enabling control of a thermal decomposition temperature. By utilizing the modified melamine salt in the coating composition and controlling $\Delta t$ to fall within the range specified herein, this application improves the high-temperature storage performance and mechanical safety performance of the electrochemical device.

In an embodiment of this application, $15\,°C \leq \Delta t \leq 60\,°C$. By controlling the value of $\Delta t$ to fall within the above range, this application further improves the high-temperature storage performance and mechanical safety performance of the electrochemical device.

In an embodiment of this application, a solubility of the modified melamine salt in a test electrolyte solution is $s_l$, and $s_l$ is less than 0.1 g/g. By controlling the solubility $s_l$ of the modified melamine salt in the test electrolyte solution to fall within the above range, this application reduces the amount of the modified melamine salt dissolved in the test electrolyte solution, and improves the stability of the coating composition, thereby improving the high-temperature storage performance and mechanical safety performance of the electrochemical device.

In an embodiment of this application, $s_l \leq 0.02$ g/g. By controlling the solubility $s_l$ of the modified melamine salt in the test electrolyte solution to fall within the above range, this application further reduces the amount of modified melamine salt dissolved in the test electrolyte solution, and improves the stability of the coating composition, thereby further improving the high-temperature storage performance and mechanical safety performance of the electrochemical device.

In an embodiment of this application, a residual mass percent after thermogravimetric weight loss of the modified melamine salt as characterized by a thermogravimetric (TG) analysis curve is w, satisfying: $1\% \leq w \leq 35\%$. By controlling the residual mass percent w after thermogravimetric weight loss of the modified melamine salt to fall within the above range, this application improves the thermal stability of the modified melamine salt, and reduces the probability of high-temperature decomposition of the modified melamine salt, thereby improving the high-temperature storage performance and mechanical safety performance of the electrochemical device.

In an embodiment of this application, 4.56% ≤ w ≤ 33%. By controlling the residual mass percent w after thermogravimetric weight loss of the modified melamine salt to fall within the above range, this application further improves the high-temperature storage performance and mechanical safety performance of the electrochemical device.

In an embodiment of this application, a particle diameter of the modified melamine salt is $D_{v50}$, satisfying: 0.1 μm ≤ $D_{v50}$ ≤ 3 μm. By controlling the particle diameter $D_{v50}$ of the modified melamine salt to fall within the above range, this application makes the particle diameter of the coating composition moderate, and improves the thickness and uniformity of the coating, thereby improving the high-temperature storage performance and mechanical safety performance of the electrochemical device.

In an embodiment of this application, 0.3 μm ≤ $D_{v50}$ ≤ 1.5 μm. By controlling the particle diameter $D_{v50}$ of the modified melamine salt to fall within the above range, this application further improves the thickness and uniformity of the coating, thereby further improving the high-temperature storage performance and mechanical safety performance of the electrochemical device.

In an embodiment of this application, based on a mass of the coating composition, a mass percent of the modified melamine salt is a, satisfying: 50% ≤ a ≤ 99%. By controlling the mass percent a of the modified melamine salt to fall within the above range, this application causes the mass of the modified melamine salt in the coating composition to be appropriate. When problems such as overheating or impact occur, the coating composition plays a role in reducing heat generation, thereby improving the high-temperature storage performance and mechanical safety performance of the electrochemical device.

In an embodiment of this application, 70% ≤ a ≤ 95%. By controlling the mass percent a of the modified melamine salt to fall within the above range, this application causes the mass of the modified melamine salt in the coating composition to be appropriate. When problems such as overheating or impact occur, the coating composition further restricts the movement of lithium ions and electrons in the positive electrode plate, hinders the current flow, and reduces heat generation, thereby further improving the high-temperature storage performance and mechanical safety performance of the electrochemical device.

In an embodiment of this application, the binder includes at least one of polyacrylic acid, polyacrylate ester, polyvinylidene fluoride, styrene-butadiene rubber, sodium carboxymethyl cellulose, polyvinyl alcohol, polyimide, or aluminum hydroxide sol. By controlling the type of the binder to fall within the above range, this application improves the high-temperature storage performance and mechanical safety performance of the electrochemical device.

In an embodiment of this application, the modified melamine salt is obtained by introducing a molecular modifier during reaction of melamine with an inorganic acid or an organic acid. The molecular modifier contains a plurality of hydroxyl groups or a plurality of amino groups. By controlling the preparation method of the modified melamine salt to fall within the range specified herein, this application makes the endothermic temperature of the modified melamine salt lower than that of the unmodified melamine salt, thereby improving the high-temperature storage performance and mechanical safety performance of the electrochemical device.

In an embodiment of this application, the molecular modifier includes a polyhydroxyl polymer polymerized from a small-molecule compound. The polyhydroxyl polymer includes at least one of polyvinyl alcohol, polyethylene glycol, or polymeric polyol. By controlling the type of the molecular modifier to fall within the above range, this application improves the high-temperature storage performance and mechanical safety performance of the electrochemical device.

In an embodiment of this application, the molecular modifier includes a polyhydroxy compound or a polyamino compound. The polyhydroxy compound includes at least one of ethylene glycol, propylene glycol, glycerol, butylene glycol, hexylene glycol, pentaerythritol, ethylenediaminetetraacetic acid, trimethylolethane, xylitol, or sorbitol. The polyamino compound includes at least one of ethylenediamine or hexamethylenetetramine. By controlling the type of the molecular modifier to fall within the above range, this application improves the high-temperature storage performance and mechanical safety performance of the electrochemical device.

In an embodiment of this application, the inorganic acid includes at least one of phosphoric acid, pyrophosphoric acid, or boric acid. The organic acid includes at least one of cyanuric acid, phthalic acid, oxalic acid, phytic acid, or 2-carboxyethylphenylphosphinic acid. By controlling the type of the inorganic acid or the organic acid during molecular modification to fall within the above range, this application improves the high-temperature storage performance and mechanical safety performance of the electrochemical device.

In an embodiment of this application, based on a total mass of the modified melamine salt, a mass percent of the molecular modifier is b, satisfying: 0.1% ≤ b ≤ 15.0%. By controlling the mass percent b of the molecular modifier to fall within the above range, this application causes the content of the molecular modifier to be appropriate, enables the molecular modifier to completely react, reduces the residual amount of the molecular modifier, and reduces the probability of the residual molecular modifier dissolving in the electrolyte solution, thereby improving the high-temperature storage performance and mechanical safety performance of the electrochemical device.

In an embodiment of this application, 0.5% ≤ b ≤ 5.0%. By controlling the mass percent b of the molecular modifier to fall within the above range, this application further makes the molecular modifier react completely, reduces the residual amount of the molecular modifier, and reduces the probability of the residual molecular modifier dissolving in the electrolyte solution, thereby further improving the high-temperature storage performance and mechanical safety performance of the electrochemical device.

In an embodiment of this application, an absolute value of a pH difference between the modified melamine salt and the binder is m, satisfying: $0 \leq m \leq 5.0$. By controlling the absolute value m of the pH difference between the modified melamine salt and the binder to fall within the above range, this application makes the pH value of the binder close to the pH value of the modified melamine salt, thereby improving the high-temperature storage performance and mechanical safety performance of the electrochemical device.

In an embodiment of this application, $0 \leq m \leq 2.5$. By controlling the absolute value m of the pH difference between the modified melamine salt and the binder to fall within the above range, this application further improves the high-temperature storage performance and mechanical safety performance of the electrochemical device.

A second aspect of this application provides an electrochemical device. The electrochemical device includes the coating composition disclosed in any one of the preceding embodiments. Therefore, the electrochemical device exhibits excellent high-temperature storage performance and mechanical safety performance.

In an embodiment of this application, the electrochemical device includes a positive electrode plate and a separator. The coating composition is disposed on a surface of the separator, the surface facing the positive electrode plate, and/or on at least one surface of the positive electrode plate.

A third aspect of this application provides an electronic device. The electronic device includes the electrochemical device according to any one of the embodiments described above. Therefore, the electronic device exhibits excellent high-temperature storage performance and mechanical safety performance.

This application provides a coating composition, an electrochemical device containing same, and an electronic device. The coating composition includes a modified melamine salt and a binder. The endothermic temperature of the modified melamine salt is lower than the endothermic temperature of an unmodified melamine salt as characterized by a DSC curve. The difference between the two endothermic temperatures is $\Delta t$, $5 \,°C \leq \Delta t \leq 100 \,°C$. The endothermic temperature of the modified melamine salt is lower than that of the unmodified melamine salt, and can regulate the thermal decomposition temperature. By utilizing the modified melamine salt in the coating composition and controlling $\Delta t$ to fall within the range specified herein, this application improves the high-temperature storage performance and mechanical safety performance of the electrochemical device.

Definitely, a single product or method in which the technical solution of this application is implemented does not necessarily achieve all of the above advantages concurrently.

**BRIEF DESCRIPTION OF DRAWINGS**

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other embodiments from the drawings.

FIG. 1 is a DSC curve of a modified melamine cyanurate salt according to Embodiment 1-2 of this application;
FIG. 2 is a DSC curve of an unmodified melamine cyanurate salt according to Comparative Embodiment 2 of this application;
FIG. 3 is a TG curve of a modified melamine cyanurate salt according to Embodiment 1-2 of this application;
FIG. 4 is a TG curve of an unmodified melamine cyanurate salt according to Comparative Embodiment 2 of this application;
FIG. 5 is a scanning electron microscope image of an unmodified melamine cyanurate salt according to Comparative Embodiment 2 of this application;
FIG. 6 is a scanning electron microscope image of a modified melamine cyanurate salt according to Embodiment 1-2 of this application; and
FIG. 7 is a scanning electron microscope image of a modified melamine cyanurate salt according to Embodiment 1-4 of this application.

**DETAILED DESCRIPTION**

The following describes the technical solutions in this application clearly and comprehensively with reference to the embodiments hereof. Evidently, the described embodiments are merely a part of but not all of the embodiments of this application. All other embodiments derived by a person skilled in the art based on this application still fall within the protection scope of this application.

It is hereby noted that in specific embodiments of this application, this application is construed by using a lithium-ion battery as an example of the electrochemical device, but the electrochemical device according to this application is not limited to the lithium-ion battery. Specific technical solutions are as follows:

A first aspect of this application provides a coating composition. The coating composition includes a modified melamine salt and a binder. An endothermic temperature of the modified melamine salt is lower than an endothermic temperature of an unmodified melamine salt as characterized by a DSC curve. A difference between the two endothermic temperatures is $\Delta t$, $5\,°C \leq \Delta t \leq 100\,°C$.

As an example, $\Delta t$ may be 5 °C, 10 °C, 20 °C, 30 °C, 40 °C, 50 °C, 60 °C, 70 °C, 80 °C, 90 °C, 100 °C, or a value falling within a range formed by any two thereof. When $\Delta t$ is less than 5 °C, the endothermic temperature difference is too small to reflect the performance difference between the modified melamine salt and the unmodified melamine salt. When $\Delta t$ is greater than 100 °C, the endothermic temperature difference is excessively large, resulting in poor thermal stability of the modified melamine salt. This causes decomposition or side reactions to occur in the secondary battery in operating environments such as a storage environment at a high temperature (greater than or equal to 85 °C), thereby affecting the high-temperature storage performance of the electrochemical device.

Through research, the applicant hereof finds that the melamine salt used in the coating composition can effectively restricts the movement of lithium ions and electrons in the positive electrode plate when the electrochemical device is subjected to heat exposure, penetration, collision, impact, and the like, thereby hindering the flow of current and effectively suppressing overheating and explosion of the electrochemical device while minimizing the impact on the normal operating performance of the electrochemical device. Based on this, the applicant hereof molecularly modifies the melamine salt in the coating composition. The modified melamine salt exhibits an endothermic temperature lower than that of the unmodified melamine salt as characterized by a DSC curve. When the difference $\Delta t$ thereof satisfies $5\,°C \leq \Delta t \leq 100$ °C, the modified melamine salt exhibits a lower endothermic temperature than the unmodified melamine salt, enabling the regulation of the thermal decomposition temperature, and consequently improving the high-temperature storage performance and mechanical safety performance of the electrochemical device.

The type of the modified melamine salt is not particularly limited herein, as long as the objectives of this application can be achieved. For example, the modified melamine salt includes, but is not limited to, at least one of modified melamine phosphate salt, modified melamine cyanurate salt, or modified melamine phthalate salt. It is hereby noted that "$\Delta t$" in this application means a difference between the endothermic temperature of the modified melamine salt and the endothermic temperature of the same type of unmodified melamine salt. For example, in some embodiments, $\Delta t$ means a difference between the endothermic temperature of modified melamine phosphate salt and the endothermic temperature of unmodified melamine phosphate salt.

In an embodiment of this application, $15\,°C \leq \Delta t \leq 60\,°C$. As an example, $\Delta t$ may be 15 °C, 20 °C, 25 °C, 30 °C, 35 °C, 40 °C, 45 °C, 50 °C, 55 °C, 60 °C, or a value falling within a range formed by any two thereof. By controlling the value of $\Delta t$ to fall within the above range, this application endows the modified melamine salt with more excellent high-temperature storage performance and mechanical safety performance.

The method for regulating and controlling $\Delta t$ is not particularly limited herein, as long as the objectives of this application can be achieved. For example, the value of $\Delta t$ may be regulated by changing the type and/or mass percent of the molecular modifier introduced during synthesis of the modified melamine salt, or by introducing the molecular modifier at different stages of the synthesis of the modified melamine salt. Generally, $\Delta t$ varies depending on the type and/or mass percent of the molecular modifier. For example, $\Delta t$ increases with the increase of the mass percent of the molecular modifier.

In an embodiment of this application, a solubility of the modified melamine salt in a test electrolyte solution is $s_l$, and $s_l$ is less than 0.1 g/g. As an example, the value of $s_l$ may be 0.01 g/g, 0.02 g/g, 0.03 g/g, 0.04 g/g, 0.05 g/g, 0.06 g/g, 0.07 g/g, 0.08 g/g, 0.09 g/g, or a value falling within a range formed by any two thereof. By controlling the solubility $s_l$ of the modified melamine salt in the test electrolyte solution to fall within the above range, this application reduces the amount of the modified melamine salt dissolved in the test electrolyte solution, and improves the stability of the coating composition, thereby improving the high-temperature storage performance and mechanical safety performance of the electrochemical device.

In this application, the preparation method of the test electrolyte solution may include, but is not limited to, the following steps: mixing ethylene carbonate, propylene carbonate (PC), and diethyl carbonate (DEC) at a mass ratio of (15% to 25%) : (25% to 35%) : (55% to 65%) to form a base solvent, adding a lithium salt $LiPF_6$, a carboxylate ester, and fluoroethylene carbonate into the base solvent, and stirring well to obtain a test electrolyte solution. Based on the mass of the test electrolyte solution, the mass percent of the lithium salt $LiPF_6$ may be 10% to 20%, the mass percent of the carboxylate ester and the mass percent of the fluoroethylene carbonate may be 2% to 15% respectively, and the remainder is the base solvent. The carboxylate ester includes, but is not limited to, at least one of methyl formate, methyl acetate, ethyl acetate, n-propyl acetate, tert-butyl acetate, methyl propionate, ethyl propionate, propyl propionate, $\gamma$-butyrolactone, decanolactone, valerolactone, or caprolactone.

In an embodiment of this application, the solubility of the modified melamine salt in the test electrolyte solution is $s_l$, and $s_l$ is less than or equal to 0.02 g/g. As an example, the value of $s_l$ may be 0.001 *g/g*, 0.005 *g/g*, 0.01 g/g, 0.015 *g/g*, 0.02 g/g, or a value falling within a range formed by any two thereof. By controlling the solubility $s_l$ of the modified melamine salt in the test electrolyte solution to fall within the above range, this application further reduces the amount of modified melamine salt dissolved in the test electrolyte solution, and improves the stability of the coating composition, thereby further improving the high-temperature storage performance and mechanical safety performance of the electrochemical device.

The method for regulating and controlling the solubility of the modified melamine salt in the test electrolyte solution is not particularly limited herein, as long as the objectives of this application can be achieved. For example, this may be implemented by regulating at least one of the reaction temperature, reaction time, or a cleaning and drying process during the synthesis of the modified melamine salt.

In an embodiment of this application, a residual mass percent after thermogravimetric weight loss of the modified melamine salt as characterized by a thermogravimetric analysis curve is w, satisfying: $1\% \leq w \leq 35\%$. As an example, the value of w may be 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, or a value falling within a range formed by any two thereof. An unmodified melamine salt decomposes and sublimes at an ambient temperature greater than or equal to 250 °C. A modified melamine salt, after being subjected to a treatment at a temperature greater than or equal to 250 °C, carbonizes and remains on the positive electrode plate and/or the separator. By controlling the residual mass percent w after thermogravimetric weight loss of the modified melamine salt to fall within the above range, this application increases a thermal response onset temperature and a response speed of the modified melamine salt. In this way, when the electrochemical device rapidly generates heat, the modified melamine salt decomposes upon exposure to heat, absorbs heat to lower the temperature, and generates gas to dilute active oxygen, thereby reducing the probability of thermal runaway of the electrochemical device. Furthermore, a carbonization product of the modified melamine salt can maintain the coating structure, thereby reducing the probability of a short circuit caused by further contact between a positive electrode plate and a negative electrode plate. This improves the high-temperature storage performance and mechanical safety performance of the electrochemical device.

In an embodiment of this application, $4.56\% \leq w \leq 33\%$. As an example, the value of w may be 4.56%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, or a value falling within a range formed by any two thereof. By controlling the residual mass percent w after thermogravimetric weight loss of the modified melamine salt to fall within the above range, this application further improves the thermal stability of the modified melamine salt, thereby further improving the high-temperature storage performance and mechanical safety performance of the electrochemical device.

The method for regulating and controlling the residual mass percent w after thermogravimetric weight loss of the modified melamine salt is not particularly limited herein, as long as the objectives of this application can be achieved. For example, this may be implemented by changing at least one of the type or the mass percent of the molecular modifier introduced during synthesis of the modified melamine salt. Generally, w varies depending on the type and/or mass percent of the molecular modifier.

In an embodiment of this application, a particle diameter of the modified melamine salt is $D_{v50}$, satisfying: $0.1\ \mu m \leq D_{v50} \leq 3.0\ \mu m$. As an example, the value of $D_{v50}$ may be 0.1 μm, 0.2 μm, 0.3 μm, 0.4 μm, 0.5 μm, 0.6 μm, 0.7 μm, 0.8 μm, 0.9 μm, 1.0 μm, 1.1 μm, 1.2 μm, 1.3 μm, 1.4 μm, 1.5 μm, 1.6 μm, 1.7 μm, 1.8 μm, 1.9 μm, 2.0 μm, 2.1 μm, 2.2 μm, 2.3 μm, 2.4 μm, 2.5 μm, 2.6 μm, 2.7 μm, 2.8 μm, 2.9 μm, 3.0 μm, or a value falling within a range formed by any two thereof. By controlling the particle diameter $D_{v50}$ of the modified melamine salt to fall within the above range, this application makes the particle diameter of the coating composition moderate, and improves the thickness and uniformity of the coating formed by the coating composition, thereby improving the high-temperature storage performance and mechanical safety performance of the electrochemical device.

In an embodiment of this application, $0.3\ \mu m \leq D_{v50} \leq 1.5 \mu m$. As an example, $D_{v50}$ may be 0.3 μm, 0.4 μm, 0.5 μm, 0.6 μm, 0.7 μm, 0.8 μm, 0.9 μm, 1.0 μm, 1.1 μm, 1.2 μm, 1.3 μm, 1.4 μm, 1.5 μm, or a value falling within a range formed by any two thereof. By controlling the particle diameter $D_{v50}$ of the modified melamine salt to fall within the above range, this application further improves the thickness and uniformity of the coating formed by the coating composition, thereby further improving the high-temperature storage performance and mechanical safety performance of the electrochemical device.

The method for regulating and controlling the particle diameter $D_{v50}$ of the modified melamine salt is not particularly limited herein, as long as the objectives of this application can be achieved. For example, this may be implemented by sieving and pulverization.

In this application, the particle diameter $D_{v50}$ of the modified melamine salt represents a particle diameter value at which the cumulative volume percentage of the sample particles of the modified melamine salt reaches 50% in a volume-based particle size distribution curve viewed from a small-diameter side.

In an embodiment of this application, based on a mass of the coating composition, a mass percent of the modified melamine salt is a, satisfying: $50\% \leq a \leq 99\%$. As an example, the value of a may be 50%, 55%, 60%, 65%, 70%, 75%, 80%, 85%, 90%, 95%, 99%, or a value falling within a range formed by any two thereof. By controlling the mass percent a of the modified melamine salt to fall within the above range, this application causes the mass of the modified melamine salt in the coating composition to be appropriate. When problems such as overheating or impact occur, the coating composition well restricts the movement of lithium ions and electrons in the positive electrode plate. This hinders the current flow, and reduces heat generation, thereby improving the high-temperature storage performance and mechanical safety performance of the electrochemical device.

In an embodiment of this application, $70\% \leq a \leq 95\%$. As an example, the value of a may be 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, or a value falling within a range formed by any two thereof. By controlling the mass percent a of the modified melamine salt to fall within the range specified herein, this application causes the mass of the modified melamine salt in the coating composition to be appropriate. When problems such as overheating or impact occur, the coating composition further restricts the movement of lithium ions and electrons in the positive electrode plate, hinders the current flow, and reduces heat generation, thereby further improving the high-temperature storage performance and mechanical safety performance of the electrochemical device.

In an embodiment of this application, the binder includes at least one of polyacrylic acid, polyacrylate ester, polyvinylidene fluoride, styrene-butadiene rubber, sodium carboxymethyl cellulose, polyvinyl alcohol, polyimide, or aluminum hydroxide sol. By controlling the type of the binder to fall within the range specified herein, this application improves the adhesion between the coating composition and a positive current collector, reduces the degree of peeling between the coating composition and the positive current collector during cycling, and reduces the interface contact impedance during cycling, thereby improving the high-temperature storage performance and mechanical safety performance of the electrochemical device.

The mass percent of the binder in the coating composition is not particularly limited herein, as long as the objectives of this application can be achieved. For example, based on the mass of the coating composition, the mass percent of the binder is 1% to 10%.

In an embodiment of this application, the coating composition further includes a ceramic compound. The type of the ceramic compound is not particularly limited herein, as long as the objectives of this application can be achieved. For example, the ceramic compound may include at least one of an inorganic fast-ion conductor, magnesium hydroxide, aluminum hydroxide, silicon dioxide, aluminum oxide, or boehmite. The inorganic fast-ion conductor may include at least one of lithium aluminum titanium phosphate ($Li_{1+a}Al_aTi_{2-a}(PO_4)_3$, $0.1 \leq a \leq 0.5$, LATP for short), lithium lanthanum titanium oxide ($Li_{3b}La_{(2/3-b)}TiO_3$, $0.03 \leq b \leq 0.167$, LLTO for short), or lithium lanthanum zirconium oxide ($Li_7La_3Zr_2O_{12}$, LLZO for short). The type of the ceramic compound is not particularly limited herein, as long as the objectives of this application can be achieved. For example, based on the mass of the coating composition, the mass percent of the ceramic compound is 0% to 50%.

In an embodiment of this application, the coating composition further includes a wetting agent. The type of the wetting agent is not particularly limited herein, and may be a well-known conventional wetting agent in this field, as long as the objectives of this application can be achieved. The content of the wetting agent is not particularly limited herein, as long as the objectives of this application can be achieved. For example, based on the mass of the coating composition, the mass percent of the wetting agent is 0% to 2%.

In an embodiment of this application, the modified melamine salt is obtained by introducing a molecular modifier during reaction of melamine with an inorganic acid or an organic acid. The molecular modifier contains a plurality of hydroxyl groups or a plurality of amino groups. It is hereby noted that the "plurality of" means 2 or more hydroxyl groups or amino groups. The number of hydroxyl groups or amino groups in the molecular modifier is not particularly limited herein, as long as the objectives of this application can be achieved. For example, the number of hydroxyl or amino functional groups may be 2 to 4. With the molecular modifier introduced during hydrogen-bond self-assembly in the reaction between the melamine and the inorganic acid or organic acid, the molecular modifier is caused to participate in the hydrogen-bond self-assembly of the melamine salt, thereby disrupting the planar regularity thereof at a supramolecular level, interfering with and suppressing the formation of a large planar hydrogen-bond network, and consequently lowering the melting temperature. By controlling the preparation method of the modified melamine salt to fall within the range specified herein, this application causes the endothermic temperature difference between the modified melamine salt and the unmodified melamine salt to fall within the range specified herein, thereby improving the high-temperature storage performance and mechanical safety performance of the electrochemical device.

The method for preparing the coating composition is not particularly limited herein, as long as the objectives of this application can be achieved. For example, in some embodiments, the preparation method of the coating composition includes, but is not limited to, the following steps: (1) preparation of a modified melamine salt: the modified melamine salt is obtained by introducing a molecular modifier during reaction of melamine with an inorganic acid or an organic acid; (2) preparation of a coating composition: adding the modified melamine salt, a binder, and a ceramic compound into a dispersion tank, adding a solvent, and dispersing and mixing well to obtain a coating composition. The type of the solvent in step (2) above is not particularly limited herein, as long as the objectives of this application can be achieved. For example, the solvent includes, but is not limited to, N-methyl-pyrrolidone (NMP) or deionized water.

In an embodiment of this application, the molecular modifier includes a polyhydroxyl polymer polymerized from a small-molecule compound. The polyhydroxyl polymer includes at least one of polyvinyl alcohol (HO(CHCHO)$_n$H), polyethylene glycol (HO(CH$_2$CH$_2$O)$_n$H), or polymeric polyol. In the polyvinyl alcohol, n represents the degree of polymerization. The degree of polymerization may be categorized into ultrahigh degree of polymerization (molecular weight 250,000 to 300,000), high degree of polymerization (molecular weight 170,000 to 220,000), medium degree of polymerization (molecular weight 120,000 to 150,000), and low degree of polymerization (molecular weight 25,000 to 35,000). With a relative molecular mass being 200 to 6,000, the polyethylene glycol may be used as a fusion promoter. The type of the polymeric polyol is not particularly limited herein, as long as the objectives of this application can be achieved. For example, the polymeric polyol may be at least one of polypropylene glycol (H(C$_3$H$_6$O)$_n$OH) with a molecular weight of 400 to 2,000 or glycerol homopolymer (HO(CH$_2$OHCHCH$_2$O)$_n$H) with a molecular weight of 200 to 1,500. By controlling the type of the molecular modifier to fall within the above range, this application causes the modified melamine salt to exhibit different endothermic temperatures, thereby improving the high-temperature storage performance and mechanical safety performance of the electrochemical device.

In an embodiment of this application, the molecular modifier includes a polyhydroxy compound or a polyamino compound. The polyhydroxy compound includes at least one of ethylene glycol, propylene glycol, glycerol, butylene glycol, hexylene glycol, pentaerythritol, ethylenediaminetetraacetic acid, trimethylolethane, xylitol, or sorbitol. The polyamino compound includes at least one of ethylenediamine or hexamethylenetetramine. By controlling the type of the molecular modifier to fall within the above range, this application causes the modified melamine salt to exhibit different endothermic temperatures, thereby improving the high-temperature storage performance and mechanical safety performance of the electrochemical device.

In an embodiment of this application, the inorganic acid includes at least one of phosphoric acid, pyrophosphoric acid, or boric acid. The organic acid includes at least one of cyanuric acid, phthalic acid, oxalic acid, phytic acid, or 2-carboxyethylphenylphosphinic acid. By controlling the type of the inorganic acid or organic acid during molecular modification to fall within the above range, this application causes the modified melamine salt to exhibit different endothermic temperatures, thereby improving the high-temperature storage performance and mechanical safety performance of the electrochemical device.

In an embodiment of this application, based on a total mass of the modified melamine salt, a mass percent of the molecular modifier is b, satisfying: $0.1\% \leq b \leq 15.0\%$. As an example, the value of b may be 0.1%, 0.5%, 1.0%, 1.5%, 2.0%, 2.5%, 3.0%, 3.5%, 4.0%, 4.5%, 5.0%, 5.5%, 6.0%, 6.5%, 7.0%, 7.5%, 8.0%, 8.5%, 9.0%, 9.5%, 10.0%, 10.5%, 11.0%, 11.5%, 12.0%, 12.5%, 13.0%, 14.5%, 15.0%, or a value falling within a range formed by any two thereof. By controlling the mass percent b of the molecular modifier to fall within the above range, this application causes the content of the molecular modifier to be appropriate. During the synthesis of the modified melamine salt, the molecular modifier is less prone to disrupt the structure of the melamine salt. The molecular modifier forms bonds with melamine salt molecules, reacting completely and reducing the probability of the molecular modifier existing as a pure substance in the reaction system. In this way, the resulting modified melamine salt exhibits a suitable endothermic temperature difference compared to the same type of unmodified melamine salt. This improves the high-temperature storage performance and mechanical safety performance of the electrochemical device.

In an embodiment of this application, $0.5\% \leq b \leq 5.0\%$. As an example, the value of b may be 0.5%, 1.0%, 1.5%, 2.0%, 2.5%, 3.0%, 3.5%, 4.0%, 4.5%, 5.0%, or a value falling within a range formed by any two thereof. By controlling the mass percent b of the molecular modifier to fall within the above range, this application further causes the molecular modifier and the melamine salt to react completely, thereby reducing the probability of the molecular modifier existing as a pure substance in the reaction system. In this way, the resulting modified melamine salt exhibits a suitable endothermic temperature difference compared to the same type of unmodified melamine salt. This further improves the high-temperature storage performance and mechanical safety performance of the electrochemical device.

In an embodiment of this application, an absolute value of a pH difference between the modified melamine salt and the binder is m, satisfying: $0 \leq m \leq 5.0$. As an example, the value of m may be 0, 0.5, 1.0, 1.5, 2.0, 2.5, 3.0, 3.5, 4.0, 4.5, 5.0, or a value falling within a range formed by any two thereof. By controlling the absolute value m of the pH difference between the modified melamine salt and the binder to fall within the above range, this application reduces the pH difference between the binder and the modified melamine salt, reduces the probability that the binder and the modified melamine salt agglomerate to produce large particles during the stirring and mixing of the slurry due to acid-base imbalance, causes the binder to be evenly dispersed, and reduces the occurrence of problems such as coating omission, clogging, and excessive thickness in a coating process, thereby improving the transmission capacity of lithium ions and electrons in the coating composition, and consequently improving the high-temperature storage performance and mechanical safety performance of the electrochemical device.

In an embodiment of this application, $0 \leq m \leq 2.5$. As an example, the value of m may be 0, 0.5, 1.0, 1.5, 2.0, 2.5, or a value falling within a range formed by any two thereof. By controlling the absolute value m of the pH difference between the modified melamine salt and the binder to fall within the above range, this application further reduces the pH difference between the binder and the modified melamine salt, further reduces the probability that the binder and the modified melamine salt agglomerate to produce large particles during the stirring and mixing of the slurry due to acid-base imbalance, reduces the probability of occurrence of problems such as coating omission, clogging, and excessive thickness in a coating process, and also reduces the probability of obstruction of the transport of lithium ions and electrons due to large particles. This further improves the high-temperature storage performance and mechanical safety performance of the electrochemical device.

The method for regulating and controlling the absolute value m of the pH difference is not particularly limited herein, as long as the objectives of this application can be achieved. For example, this can be implemented by mixing the same type of modified melamine salt with different types of binders, or by mixing the same type of binder with modified melamine salts of different pH values.

A second aspect of this application provides an electrochemical device. The electrochemical device includes the coating composition disclosed in any one of the preceding embodiments. Therefore, the electrochemical device exhibits excellent high-temperature storage performance and mechanical safety performance.

In an embodiment of this application, the electrochemical device further includes a positive electrode plate and a separator. The coating composition is disposed on a surface of the separator, the surface facing the positive electrode plate, and/or on at least one surface of the positive electrode plate. For example, in some embodiments, the coating composition may be disposed on a surface of the separator, the surface facing the positive electrode plate along a thickness direction of the separator. In other embodiments, the coating composition is disposed on a surface of the separator, the surface facing the positive electrode plate along the thickness direction of the separator, and the coating composition is also disposed on a surface of the positive electrode plate along the thickness direction of the positive electrode plate. In still other embodiments, the coating composition is disposed on a surface of the separator, the surface facing the positive electrode plate along the thickness direction of the separator, and at the same time, the coating composition is also disposed on both surfaces of the positive electrode plate along the thickness direction of the positive electrode plate. It is hereby noted that the "surface" here may be the entire region of the surface of the positive electrode plate or the separator, or a partial region of the surface of the positive electrode plate or the separator, without being particularly limited herein, as long as the objectives of the application can be achieved.

In this application, the positive electrode plate includes a positive current collector and a positive electrode material layer disposed on at least one surface of the positive current collector. The "positive electrode material layer disposed on at least one surface of the positive current collector" means that the positive electrode material layer may be disposed on one surface of the positive current collector or on both surfaces of the positive current collector along the thickness direction of the current collector. It is hereby noted that the "surface" here may be the entire region of the surface of the positive current collector, or a partial region of the surface of the positive current collector, without being particularly limited herein, as long as the objectives of the application can be achieved. The positive current collector is not particularly limited herein, as long as the objectives of this application can be achieved. For example, the positive current collector may include aluminum foil, aluminum alloy foil, a composite current collector (for example, an aluminum-carbon composite current collector), or the like. The positive electrode material layer includes a positive active material. The positive active material is not particularly limited herein as long as the objectives of this application can be achieved. For example, the positive active material may include, but is not limited to, at least one of lithium nickel cobalt manganese oxide (for example, NCM811, NCM622, NCM523, or NCM111), lithium nickel cobalt aluminum oxide, lithium iron phosphate, a lithium-rich manganese-based material, lithium cobalt oxide ($LiCoO_2$), lithium manganese oxide, lithium manganese iron phosphate, or lithium titanium oxide. The positive electrode material layer further includes a conductive agent and a positive electrode binder. The conductive agent and the positive electrode binder are not particularly limited herein, as long as the objectives of this application can be achieved. For example, the conductive agent may include, but is not limited to, at least one of conductive carbon black (Super P), carbon nanotubes (CNTs), carbon fibers, flake graphite, graphene, a metal material, or a conductive polymer. The conductive carbon black may include, but is not limited to, acetylene black or Ketjen black. The carbon nanotubes may include, but are not limited to, single-walled carbon nanotubes and/or multi-walled carbon nanotubes. The carbon fibers may include, but are not limited to, vapor grown carbon fibers (VGCF) and/or carbon nanofibers. The metal material may include, but is not limited to, metal powder and/or metal fibers. Specifically, the metal may include, but is not limited to, at least one of copper, nickel, aluminum, or silver. The conductive polymer may include, but is not limited to, at least one of polyphenylene derivatives, polyaniline, polythiophene, polyacetylene, or polypyrrole. The positive electrode binder may include, but is not limited to, at least one of polyacrylic acid, sodium polyacrylate, potassium polyacrylate, lithium polyacrylate, polyimide, polyvinyl alcohol, carboxymethyl cellulose, sodium carboxymethyl cellulose, lithium carboxymethyl cellulose, polyimide, polyamide imide, styrene-butadiene rubber, or polyvinylidene fluoride. The thicknesses of the positive current collector and positive electrode material layer are not particularly limited herein, as long as the objectives of this application can be achieved. For example, the thickness of the positive current collector is 5 $\mu$m to 20 $\mu$m, and the thickness of the positive electrode material layer is 30 $\mu$m to 120 $\mu$m. Optionally, the positive electrode plate may further include a conductive layer. The conductive layer is located between the positive current collector and the positive electrode material layer. The composition of the conductive layer is not particularly limited, and may be a conductive layer commonly used in the art. The conductive layer includes a conductive agent and a positive electrode binder. The conductive agent and the positive electrode binder in the conductive layer are not particularly limited herein. For example, the conductive agent and the positive electrode binder may be at least one of the above conductive agents and the above positive electrode binders.

The separator is not particularly limited herein, as long as the objectives of this application can be achieved. For example, in an embodiment of this application, the material of the separator includes, but is not limited to, at least one of a polyethylene (PE)- or polypropylene (PP)-based polyolefin (PO), a polyester (such as polyethylene terephthalate (PET) film), cellulose, polyimide (PI), polyamide (PA), spandex, or aramid. The type of the separator may include a woven film, a nonwoven film, a microporous film, a composite film, a calendered film, or a spinning film.

In an embodiment of this application, the separator may include a substrate and a surface treatment layer. The substrate may be a nonwoven fabric or a composite film, which, in each case, assumes a porous structure. The material of the substrate may include at least one of polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate. The surface treatment layer may be a polymer layer or an inorganic compound layer, or a layer compounded of a polymer and an inorganic compound. In some embodiments of this application, the inorganic compound layer includes inorganic particles and a separator binder. The inorganic particles are not particularly limited herein. For example, the inorganic particles may include at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The separator binder is not particularly limited herein. For example, the separator binder may be at least one of the above positive electrode binders. In some embodiments of this application, the polymer layer includes a polymer. The material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-co-hexafluoropropylene). The thickness of the separator is not particularly limited herein, as long as the objectives of this application can be achieved.

The method for preparing the positive electrode plate is not particularly limited herein, as long as the objectives of this application can be achieved. For example, in some embodiments, the coating composition is disposed on both surfaces of the positive electrode plate, and the method for preparing the positive electrode plate may include, but is not limited to, the following steps: (1) preparation of a semi-finished positive electrode plate: adding a positive active material, a conductive agent, and a positive electrode binder into N-methylpyrrolidone, stirring and mixing well to form a positive electrode slurry, applying the positive electrode slurry evenly to a surface of the positive current collector on one side and then drying the current collector, and then repeating the above steps on the surface of the positive current collector on the other side to obtain a semi-finished positive electrode plate coated with a positive electrode material layer on both sides. (2) preparation of a positive electrode plate: applying, in a gravure roller transfer coating manner, the coating composition to a surface of the positive electrode material layer on one side of the semi-finished positive electrode plate, the surface being away from the positive current collector; and then repeating the above steps on a surface of the positive electrode material layer on the other side of the semi-finished positive electrode plate, the surface being away from the positive current collector; and drying the coating to obtain a positive electrode plate. For example, in other embodiments, the coating composition is disposed on a single surface of the positive electrode plate, and the method for preparing the positive electrode plate may include, but is not limited to, the following steps: (1) preparation of a semi-finished positive electrode plate: adding a positive active material, a conductive agent, and a positive electrode binder into N-methylpyrrolidone, stirring and mixing well to form a positive electrode slurry, applying the positive electrode slurry evenly to a surface of the positive current collector on one side and then drying the current collector, and then repeating the above steps on the surface of the positive current collector on the other side to obtain a semi-finished positive electrode plate coated with a positive electrode material layer on both sides. (2) preparation of a positive electrode plate: selecting any one side of the semi-finished positive electrode plate coated with the positive electrode material layer on both sides, and applying, in a gravure roller transfer coating manner, the coating composition onto a side of the positive electrode material layer on a side away from the positive current collector, and drying the coating to obtain a positive electrode plate. For example, in still other embodiments, the method for preparing a positive electrode plate may include, but is not limited to, the following steps: adding a positive active material, a conductive agent, and a positive electrode binder into N-methylpyrrolidone, stirring and mixing well to form a positive electrode slurry, applying the positive electrode slurry evenly to a surface of the positive current collector on one side and then drying the current collector, and then repeating the above steps on the surface of the positive current collector on the other side to obtain a positive electrode plate coated with a positive electrode material layer on both sides.

The mass ratio between the positive active material, the conductive agent, and the positive electrode binder is not particularly limited herein, as long as the objectives of this application can be achieved. For example, the mass ratio between the positive active material, the conductive agent, and the positive electrode binder may be (95 to 98) : (1 to 5) : (1 to 3). The solid content of the positive electrode slurry is not particularly limited herein, as long as the objectives of this application can be achieved. The drying temperature is not particularly limited herein, as long as the objectives of this application can be achieved. For example, the drying temperature may be 90 °C to 130 °C.

The method for preparing the separator is not particularly limited herein, as long as the objectives of this application can be achieved. For example, in some embodiments, the coating composition is disposed on a surface of the separator, the surface facing the positive electrode plate, and the method for preparing the separator may include, but is not limited to, the following steps: preparing a substrate, applying, in a gravure roller transfer coating manner, the coating composition onto a surface of the substrate, the surface facing the positive electrode plate, and then drying the coating in an oven at 45 °C to 60 °C to obtain a separator. Alternatively, the substrate may be purchased.

In this application, the electrochemical device further includes a negative electrode plate. The negative electrode plate includes a negative current collector and a negative electrode material layer disposed on at least one surface of the negative current collector. The "negative electrode material layer disposed on at least one surface of the negative current collector" means that the negative electrode material layer may be disposed on one surface of the negative current collector or on both surfaces of the negative current collector along the thickness direction of the current collector. It is hereby noted that the "surface" here may be the entire surface region of the negative current collector, or a partial surface region of the negative current collector, without being particularly limited herein, as long as the objectives of the application can be achieved. The negative current collector is not particularly limited herein, as long as the objectives of this application can be achieved. For example, the negative current collector may include copper foil, copper alloy foil, nickel foil, stainless steel foil, titanium foil, foamed nickel, foamed copper, or composite current collector. As an example, the composite current collector may be a lithium-copper composite current collector, a carbon-copper composite current collector, a nickel-copper composite current collector, or a titanium-copper composite current collector. The negative electrode material layer includes a negative active material. The negative active material is not particularly limited herein, as long as the objectives of this application can be achieved. For example, the negative active material may include, but is not limited to, at least one of natural graphite, artificial graphite, mesocarbon microbeads, hard carbon, soft carbon, silicon, a silicon-carbon composite, Li-Sn alloy, Li-Sn-O alloy, Sn, SnO, $SnO_2$, spinel-structured lithiated $TiO_2$-$Li_4Ti_5O_{12}$, or Li-Al alloy. In some embodiments of this application, the negative electrode material layer may further include a conductive agent and a negative electrode binder. The types of the conductive agent and the negative electrode binder are not particularly limited herein, as long as the objectives of this application can be achieved. For example, the conductive agent and the negative electrode binder may be at least one of the above conductive agents and the above positive electrode binders. The mass ratio between the negative active material, the conductive agent, and the negative electrode binder in the negative electrode material layer is not particularly limited herein, and may be selected by a person skilled in the art as actually required, as long as the objectives of this application can be achieved. The thickness of the negative electrode material layer is not particularly limited herein, as long as the objectives of this application can be achieved. For example, the thickness of the negative electrode material layer on a single side is 30 $\mu$m to 120 $\mu$m. The thickness of the negative current collector is not particularly limited herein, as long as the objectives of this application can be achieved. For example, the thickness of the negative current collector is 4 $\mu$m to 15 $\mu$m. Optionally, the negative electrode plate may further include a conductive layer. The conductive layer is located between the negative current collector and the negative material layer. The constituents of the conductive layer are not particularly limited herein, and the conductive layer may be a conductive layer commonly used in the art. For example, the conductive layer includes a conductive agent and a negative electrode binder. The conductive agent and the negative electrode binder in the conductive layer are not particularly limited herein. For example, the conductive agent and the negative electrode binder may be at least one of the above conductive agents and the above negative electrode binders.

In this application, the electrochemical device further includes an electrolyte solution. The electrolyte solution includes a lithium salt and a nonaqueous solvent. The type of the lithium salt is not particularly limited herein, as long as the objectives of this application can be achieved. For example, the lithium salt may include, but is not limited to, at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $Li_2SiF_6$, lithium bis(oxalato)borate (LiBOB), or lithium difluoroborate. The content of the lithium salt in the electrolyte solution is not particularly limited herein, as long as the objectives of this application can be achieved. In this application, the nonaqueous solvent includes ethylene carbonate, a carboxylate ester compound, and a fluoroethylene carbonate (FEC) compound. The carboxylate ester compound may include, but is not limited to, at least one of methyl formate, methyl acetate, ethyl acetate, n-propyl acetate, tert-butyl acetate, methyl propionate, ethyl propionate, propyl propionate, $\gamma$-butyrolactone, decanolactone, valerolactone, or caprolactone. The mass percent of the nonaqueous solvent in the electrolyte solution is not particularly limited herein, as long as the objectives of this application can be achieved.

The electrochemical device of this application further includes a pocket. The pocket is configured to accommodate a positive electrode plate, a separator, a negative electrode plate, an electrolyte solution, and other components known in the art for use in an electrochemical device. Such other components are not limited herein. The packaging bag is not particularly limited herein, and may be a packaging bag well-known in the art, as long as the objectives of this application can be achieved.

The type of the electrochemical device is not particularly limited herein, and may be any device in which an electrochemical reaction occurs. In this application, the electrochemical device may include, but not limited to, a lithium metal secondary battery, a lithium-ion secondary battery (lithium-ion battery), a lithium polymer secondary battery, a lithium-ion polymer secondary battery (lithium-ion polymer battery), or the like.

The process of preparing the electrochemical device of this application is well known to a person skilled in the art, and is not particularly limited herein. For example, the preparation process of the electrochemical device may include, but is not limited to, the following steps: stacking the separator, the positive electrode plate, the separator, and the negative electrode plate in sequence, performing operations as required such as winding and folding to obtain a jelly-roll electrode assembly, putting the electrode assembly into a packaging bag, injecting the electrolyte solution into the packaging bag, and sealing the packaging bag to obtain an electrochemical device. Alternatively, the steps are as follows: stacking the separator, the positive electrode plate, the separator, and the negative electrode plate in sequence, and then fixing the four corners of the entire stacked structure by use of adhesive tape to obtain a stacked-type electrode assembly, putting the electrode assembly into a packaging bag, injecting the electrolyte solution into the packaging bag, and sealing the packaging bag to obtain an electrochemical device. In addition, an overcurrent prevention element, a conductive plate, and the like may be placed into a pocket as required, so as to prevent the rise of internal pressure, overcharge, and overdischarge of the electrochemical device.

A third aspect of this application provides an electronic device. The electronic device includes the electrochemical device according to any one of the embodiments described above. Therefore, the electronic device exhibits excellent high-temperature storage performance and mechanical safety performance.

The type of the electronic device is not particularly limited herein, and may be any electronic device known in the prior art. In some embodiments of this application, the types of the electronic device may include, but are not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, lithium-ion capacitor, or the like.

**Embodiments**

The implementations of this application are described below in more detail with reference to some embodiments and comparative embodiments. Various tests and evaluations are performed by the following methods.

**Test methods and devices**

**Testing the endothermic temperature**

Discharging a lithium-ion battery at a constant current of 0.1C until the voltage drops to 3.0 V, and then disassembling the lithium -ion battery to obtain a positive electrode plate with a coating. Cleaning the positive electrode plate by using N-methylpyrrolidone. Separating the modified melamine salt from the positive electrode plate. Filtering the modified melamine salt, and drying it at 85 °C to obtain the modified melamine salt. Measuring the endothermic temperature of the modified melamine salt by using a differential scanning calorimeter. The endothermic temperature of the same type of unmodified melamine salt may be obtained by directly measuring the endothermic temperature using the differential scanning calorimeter after the unmodified melamine salt is purchased. $\Delta t$ is a difference obtained by subtracting the endothermic temperature of the modified melamine salt from the endothermic temperature of the unmodified melamine salt.

It is hereby noted that the "coating" means a coating that contains a coating composition, and the "coating" referred to hereinafter also means a coating that contains a coating composition.

**Testing the residual mass percent after thermogravimetric weight loss**

Discharging a lithium-ion battery at a constant current of 0.1C until the voltage drops to 3.0 V, and then disassembling the lithium -ion battery to obtain a positive electrode plate with a coating. Scraping off the coating to obtain a coating powder. Soaking and cleaning the obtained coating powder 2 to 3 times by using an NMP solution to remove the residual lithium salt and adhesive layer, and then placing the cleaned powder in an 80°C vacuum oven to dry the powder and remove the solvent. Spreading 5 mg to 15 mg of the powder evenly in a crucible of a thermogravimetric analyzer. Measuring the mass change of the sample continuously by using a balance during the programmed temperature rise. The test temperature ranges from room temperature to 600 °C. The test atmosphere is a nitrogen ($N_2$) atmosphere.

### Scanning electron microscope (SEM) test

Discharging a lithium-ion battery at a constant current of 0.1C until the voltage drops to 3.0 V, and then disassembling the lithium -ion battery to obtain a positive electrode plate with a coating and dimensions of 20 mm (length) × 20 mm (width). Adding an NMP solution dropwise to a surface of the positive electrode plate with a coating to clean off the lithium salt, and then drying the electrode plate in an 80 °C blast oven. Cutting the positive electrode plate to obtain a 5 mm × 5 mm test sample. Affixing the test sample to conductive adhesive tape, performing gold sputter-coating on the sample, and capturing an SEM image of the morphology by using a Zeiss analytical scanning electron microscope.

### Testing the content of the modified melamine salt

Discharging a lithium-ion battery at a constant current of 0.1C until the voltage drops to 3.0 V, and then disassembling the lithium -ion battery to obtain a positive electrode plate with a coating. Cleaning the positive electrode plate by using N-methylpyrrolidone. Separating the modified melamine salt from the positive electrode plate to obtain a suspension that contains the coating. Taking a half of the suspension for filtering, and drying the residue at 85 °C. Weighing the residue, that is, modified melamine salt, denoted as $M_1$. Drying the remaining half of the suspension, which is unfiltered, at 85 °C, and weighing the coating composition, denoted as $M_2$. The mass percent of the melamine salt in the coating composition is calculated as mass percent = $M_1/M_2$ × 100%.

### Testing the particle size

Discharging a lithium-ion battery at a constant current of 0.1C until the voltage drops to 3.0 V, and then disassembling the lithium -ion battery to obtain a positive electrode plate with a coating. Cleaning the positive electrode plate by using N-methylpyrrolidone. Separating the modified melamine salt from the positive electrode plate. Filtering the modified melamine salt, and drying it at 85 °C to obtain a modified melamine salt powder. Dispersing the modified melamine salt powder in deionized water or alcohol, adding a sodium hexametaphosphate dispersant, and sonicating the powder for 10 minutes. Measuring the particle diameter of the modified melamine salt by using a Malvern particle size analyzer (MasterSizer 2000) to obtain a particle diameter $D_{v50}$ of the modified melamine salt.

### Testing the solubility

Preparing a test electrolyte solution: mixing ethylene carbonate, propylene carbonate (PC), and diethyl carbonate (DEC) at a mass ratio of 1 : 3 : 6 to form a base solvent, adding a lithium salt $LiPF_6$, ethyl acetate, and fluoroethylene carbonate into the base solvent, and stirring well to obtain a test electrolyte solution. Based on the mass of the test electrolyte solution, the mass percent of the lithium salt $LiPF_6$ is 15%, the mass percent of the ethyl acetate is 5%, and the mass percent of the fluoroethylene carbonate is 5%, and the remainder is the base solvent.
Discharging a lithium-ion battery at a constant current of 0.1C until the voltage drops to 3.0 V, and then disassembling the lithium -ion battery to obtain a positive electrode plate with a coating. Cleaning the positive electrode plate by using N-methylpyrrolidone. Separating the modified melamine salt from the positive electrode plate. Filtering the modified melamine salt, and drying it at 85 °C to obtain the modified melamine salt.
Placing 0.5 gram of modified melamine salt in 5 grams of test electrolyte solution, storing the test electrolyte solution at 85 °C for 1 hour, filtering out the modified melamine salt, drying the salt, and measuring the modified melamine salt, denoted as W. Calculating the solubility as $s_1$ (g/g) = (0.5 - W)/W/5.

### Testing the high-temperature storage performance

Charging a lithium-ion battery at a constant current of 0.5C in an environment of approximately 25 °C until the voltage reaches 4.5 V, and then charging the battery at a constant voltage of 4.5 V until the current is lower than 0.05C, which causes the lithium-ion battery to be in a 4.25 V fully charged state. Measuring the thickness of the lithium-ion battery. Subsequently, storing the fully charged lithium-ion battery in an oven at approximately 85 °C for approximately 24 hours, and then measuring the post-storage thickness. Calculating the high-temperature storage expansion rate of the lithium-ion battery according to the following formula:

High-temperature storage expansion rate (%) = ((post-storage thickness - prestorage thickness)/pre-storage thickness) × 100%.

**Determining the impact test pass rate**

Leaving a lithium-ion battery to stand in a 25 °C environment for 15 minutes to make the lithium-ion battery reach a constant-temperature state. Charging the lithium-ion battery at a constant current of 1C until the voltage reaches 4.5 V, and then charging the battery at a constant voltage of 4.5 V until the current drops to 0.05C.

Placing the lithium-ion battery onto a test bench in a 25 °C test environment, and leaving the side with a cell identification code to face up. Placing a 15.8 mm-diameter round rod at the center of a wide side of the lithium-ion battery, leaving the round rod to be perpendicular to a long axis of the lithium-ion battery. Dropping a 9.1±0.1 kg hammer vertically from a height of 610±25 mm freely onto an intersection between the round rod and the lithium-ion battery. Criterion for determining the test result: It is determined that a battery passes the test if no fire or explosion occurs.

Testing 20 lithium-ion batteries for each embodiment and comparative embodiment, and calculating the impact test pass rate as: pass rate (%) = number of passed batteries/20 × 100%.

**Crush test**

Leaving a lithium-ion battery to stand in a 25 °C environment for 15 minutes to make the lithium-ion battery reach a constant-temperature state. Charging the lithium-ion battery at a constant current of 1C until the voltage reaches 4.5 V, and then charging the battery at a constant voltage of 4.5 V until the current drops to 0.05C.

Placing the lithium-ion battery on a test bench in a 25 °C test environment. Pressing a 6 mm-diameter blunt nail into the lithium-ion battery, increasing the pressure at a rate of 300 N/min, and starting the pressing from the head terrace of the lithium-ion battery, which is 10±1 mm away from the upper edge of the main body of the battery, until the lithium-ion battery explodes and catches fire. Recording the compressive force (N) at this time.

**Embodiment 1-1**

**<Preparing a coating composition>**

(1) Preparing a modified melamine polyphosphate salt: Adding 2000 ml of deionized water into a 5 L reaction vessel, heating the vessel to 85 °C, and adding 200 grams of melamine ($C_3N_6H_6$) while stirring at a speed of 300 rpm. After the melamine is highly dispersed, continuing to stir for 30 min to obtain a highly dispersed melamine precursor solution. Adding 98 grams of pre-ground phosphoric acid powder and 4 grams of glycerol. Controlling the temperature to remain at 85 °C, and stirring rapidly at 500 rpm for 15 minutes. Subsequently, adding 100 grams of phosphoric acid powder, and reacting at 95 °C for 30 minutes. Cooling the reactant to a room temperature, filtering the reactant to obtain a filter cake. Washing the filter cake 2 times with an equal weight of 79 °C deionized water. Spray-drying the filter cake to obtain a modified melamine polyphosphate salt in the form of a white powder solid.

(2) Preparing a coating composition 1: Adding 3 kg of the above modified melamine polyphosphate salt and 0.3 kg of polyvinylidene fluoride binder at a mass ratio of 10 : 1 in a 20 L dispersion tank, which amounts to 3.3 kg. Adding 11.7 kg of N-methylpyrrolidone (NMP) as a solvent, and dispersing and mixing well to obtain a coating composition 1.

(3) Preparing a coating composition 2: Adding 3 kg of the above modified melamine polyphosphate salt and 0.3 kg of polyacrylic acid binder at a mass ratio of 10 : 1 in a 20 L dispersion tank, which amounts to 3.3 kg. Adding 11.7 kg of deionized water, and dispersing and mixing well to obtain a coating composition 2.

**<Preparing a positive electrode plate>**

Mixing lithium cobalt oxide as a positive active material, conductive carbon black (Super P) as a conductive agent, and polyvinylidene fluoride (PVDF, with a weight-average molecular weight Mw of 530,000) as a binder at a mass ratio of 96 : 2.5 : 1.5, adding the mixture into N-methylpyrrolidone (NMP), and stirring well to form a positive electrode slurry in which the solid content is 70 wt%. Applying the positive electrode slurry evenly onto a surface of positive current collector aluminum foil on one side, and drying the foil in an 85 °C environment. Subsequently, repeating the above steps on a surface of the aluminum foil on the other side to obtain a semi-finished positive electrode plate coated with a positive electrode material layer on both sides. Subsequently, cold-pressing and cutting the electrode plate to obtain a semi-finished positive electrode plate of 74 mm × 867 mm in size. Applying, in a gravure roller transfer coating manner, the coating composition 1 onto a surface of the positive electrode material layer on one side of the semi-finished positive electrode plate, the surface being away from the positive current collector; and then repeating the above step on a surface of the positive electrode material layer on the other side of the semi-finished positive electrode plate, the surface being away from the positive current collector; and drying the coating at 85 °C in an oven to obtain a positive electrode plate. The coating weight of the coating composition on both sides of the positive electrode plate is 6 mg/5000 mm$^2$.

### <Preparing a separator>

The substrate is a 5 $\mu$m-thick, 55%-porosity polyethylene polymer microporous film (purchased from Enjie New Materials Technology Co., Ltd.). Applying, in a gravure roller transfer coating manner, the coating composition 2 onto a surface of the substrate, the surface facing the positive electrode plate, and then drying the coating in an oven at 55 °C to obtain a separator. The coating weight of the coating composition on the substrate is 10 mg/5000 mm$^2$.

### <Preparing a negative electrode plate>

Mixing artificial graphite as a negative active material, sodium carboxymethyl cellulose (CMC) as a thickener, and styrene-butadiene rubber (SBR) as a binder at a mass ratio of 96 : 2 : 2, and then adding the mixture into deionized water, and stirring well to form a negative electrode slurry in which the solid content is 50 wt%. Applying the negative electrode slurry evenly onto a surface of negative current collector copper foil on one side, and drying the current collector. Repeating the above steps on a surface of the copper foil on the other side to obtain a negative electrode plate coated with a negative active layer on both sides. Subsequently, performing cold-pressing and cutting to obtain a negative electrode plate of 74 mm $\times$ 867 mm in size.

### <Preparing an electrolyte solution>

Mixing ethylene carbonate, ethyl acetate, and fluoroethylene carbonate (FEC) at a mass ratio of 55 : 30 : 15 in an argon atmosphere glovebox with a water content less than 10 ppm to obtain a base solvent, and then adding a lithium salt LiPF$_6$, and stirring well to obtain an electrolyte solution. Based on the total mass of the electrolyte solution, the mass percent of the lithium salt LiPF$_6$ is 12.5%, and the remainder is the base solvent.

### <Preparing a lithium-ion battery>

Stacking the prepared separator, positive electrode plate, separator, and negative electrode plate sequentially, with the separator being located between the positive electrode plate and the negative electrode plate, so as to obtain a stacked-type electrode assembly. Placing the electrode assembly, to which a positive tab and a negative tab are welded, into an aluminum laminated film packaging bag. Heat-sealing the packaging bag on all sides, leaving an injection port. Injecting the above electrolyte solution. Performing vacuum sealing, standing, chemical formation, degassing, and other steps to obtain a lithium-ion battery.

### Embodiment 1-2

### <Preparing a coating composition>

(1) Preparing a modified melamine cyanurate salt: Adding 2000 ml of deionized water into a 5 L reaction vessel, heating the vessel to 85 °C, and adding 200 grams of melamine (C$_3$N$_6$H$_6$) while stirring at a speed of 300 rpm. After the melamine is highly dispersed, continuing to stir for 30 min to obtain a highly dispersed melamine precursor solution. Adding 163 grams of pre-ground cyanuric acid powder and 4 grams of glycerol. Controlling the temperature to remain at 85 °C, and stirring rapidly at 500 rpm for 15 minutes. Subsequently, adding 163 grams of cyanuric acid powder, and reacting at 95 °C for 30 minutes. Cooling the reactant to a room temperature, filtering the reactant to obtain a filter cake. Washing the filter cake 2 times with an equal weight of 79 °C deionized water. Spray-drying the filter cake to obtain a modified melamine cyanurate salt in the form of a white powder solid.

In steps (2) and (3), the operations are the same as in Embodiment 1-1 except that the modified melamine polyphosphate salt is replaced with modified melamine cyanurate salt.

The processes of <preparing a positive electrode plate], <preparing a negative electrode plate>, <preparing a separator>, <preparing an electrolyte solution>, and [preparing a lithium-ion battery] are the same as those in Embodiment 1-1.

**Embodiments 1-3 to 1-9**

Identical to Embodiment 1-2 except that $\Delta t$ is adjusted according to Table 1. $\Delta t$ is adjusted by adjusting the amount of the molecular modifier added during the preparation of the coating composition.

**Embodiments 1-10 to 1-13**

Identical to Embodiment 1-2 except that $s_l$ is adjusted according to Table 1. $s_l$ is adjusted by adjusting the reaction temperatures of the melamine and the molecular modifier during the preparation of the coating composition.

**Embodiments 1-14 to 1-20**

Identical to Embodiment 1-1 except that the particle diameter $D_{v50}$ of the modified melamine salt is adjusted according to Table 1.

**Embodiment 1-21**

Identical to Embodiment 1-1 except that the coating composition 1 is prepared according to the following steps.

**<Preparing a coating composition>**

Preparing a coating composition 1: Adding 1.485 kg of the above modified melamine polyphosphate salt, 0.16 kg of polyvinylidene fluoride binder, and 1.685 kg of LATP ($Li_{1.4}Al_{0.4}Ti_{1.6}(PO_4)_3$) powder at a mass ratio of 45 : 5 : 50 in a 20 L dispersion tank, which amounts to 3.33 kg. Adding 11.7 kg of N-methylpyrrolidone as a solvent, and dispersing and mixing well to obtain a coating composition 1.

**Embodiments 1-22 to 1-24**

Identical to Embodiment 1-19 except that the mass percent a of the modified melamine salt is adjusted according to Table 1.
As the mass percent a of the modified melamine salt changes, the mass percent of the binder remains unchanged, and the mass percent of the LATP ($Li_{1.4}Al_{0.4}Ti_{1.6}(PO_4)_3$) changes accordingly. The sum of the mass percentages of the modified melamine salt, the LATP, and the binder is 100%.

**Embodiments 1-25 to 1-28**

Identical to Embodiment 1-1 except that the mass percent a of the modified melamine salt is adjusted according to Table 1.
As the mass percent a of the modified melamine salt changes, the mass percent of the binder changes accordingly, and the sum of the mass percentages of the modified melamine salt and the binder is 100%.

**Embodiment 1-29**

Identical to Embodiment 1-1 except that the positive electrode plate and the separator are prepared according to the following steps.

**<Preparing a positive electrode plate>**

Mixing lithium cobalt oxide as a positive active material, conductive carbon black (Super P) as a conductive agent, and polyvinylidene fluoride (PVDF, with a weight-average molecular weight Mw of 530,000) as a binder at a mass ratio of 96 : 2.5 : 1.5, adding the mixture into N-methylpyrrolidone (NMP), and stirring well to form a positive electrode slurry in which the solid content is 70 wt%. Applying the positive electrode slurry evenly onto a surface of positive current collector aluminum foil on one side, and drying the foil in an 85 °C environment. Subsequently, repeating the above steps on a surface of the aluminum foil on the other side to obtain a semi-finished positive electrode plate coated with a positive electrode material layer on both sides. Subsequently, cold-pressing and cutting the electrode plate to obtain a semi-finished positive electrode plate of 74 mm $\times$ 867 mm in size. Applying, in a gravure roller transfer coating manner, the coating composition 1 onto a surface of the positive electrode material layer on one side of the semi-finished positive electrode plate, the surface being away from the positive current collector; and drying the coating at 85 °C in an oven to obtain a positive electrode plate. The coating weight of the coating composition on one side of the positive electrode plate is 6 mg/5000 mm$^2$.

**<Preparing a separator>**

The substrate is a 5 $\mu$m-thick, 55%-porosity polyethylene polymer microporous film (purchased from Enjie New Materials Technology Co., Ltd.).

**Embodiment 1-30**

Identical to Embodiment 1-1 except that the positive electrode plate is prepared according to the following steps.

**<Preparing a positive electrode plate>**

Mixing lithium cobalt oxide as a positive active material, conductive carbon black (Super P) as a conductive agent, and polyvinylidene fluoride (PVDF, with a weight-average molecular weight Mw of 530,000) as a binder at a mass ratio of 96 : 2.5 : 1.5, adding the mixture into N-methylpyrrolidone (NMP), and stirring well to form a positive electrode slurry in which the solid content is 70 wt%. Applying the positive electrode slurry evenly onto a surface of positive current collector aluminum foil on one side, and drying the foil in an 85 °C environment. Subsequently, repeating the above steps on a surface of the aluminum foil on the other side to obtain a semi-finished positive electrode plate coated with a positive electrode material layer on both sides. Subsequently, cold-pressing and cutting the electrode plate to obtain a positive electrode plate of 74 mm $\times$ 867 mm in size.

**Embodiments 2-1 to 2-3**

Identical to Embodiment 1-1 except that the type of the molecular modifier is adjusted according to Table 2.

**Embodiment 2-4**

Identical to Embodiment 1-1 except that the type of the binder is adjusted according to Table 2.

**Embodiments 2-5 to 2-10**

Identical to Embodiment 1-1 except that the mass percent b of the molecular modifier is adjusted according to Table 2.

When the mass percent b of the molecular modifier changes, the mass percent of the inorganic or organic acid and the mass percent of the melamine change accordingly, but the molar ratio of the functional groups of the inorganic or organic acid to the melamine remains constant at 101 : 79. The sum of the mass percentages of the inorganic or organic acid, the melamine, and the molecular modifier is 100%.

**Embodiments 2-11 to 2-16**

Identical to Embodiment 1-1 except that the absolute value m of the pH difference between the modified melamine salt and the binder is adjusted according to Table 2. The absolute value m of the pH difference may be changed by mixing the same type of modified melamine salt with different types of binders.

**Comparative Embodiment 1**

Identical to Embodiment 1-1 except that the positive electrode plate and the separator are prepared according to the following steps.

**<Preparing a positive electrode plate>**

Mixing lithium cobalt oxide as a positive active material, conductive carbon black (Super P) as a conductive agent, and polyvinylidene fluoride (PVDF, with a weight-average molecular weight Mw of 530,000) as a binder at a mass ratio of 96 : 2.5 : 1.5, adding the mixture into N-methylpyrrolidone (NMP), and stirring well to form a positive electrode slurry in which the solid content is 70 wt%. Applying the positive electrode slurry evenly onto a surface of positive current collector aluminum foil on one side, and drying the foil in an 85 °C environment. Subsequently, repeating the above steps on a surface of the aluminum foil on the other side to obtain a semi-finished positive electrode plate coated with a positive electrode material layer on both sides. Subsequently, cold-pressing and cutting the electrode plate to obtain a positive electrode plate of 74 mm $\times$ 867 mm in size.

**<Preparing a separator>**

The substrate is a 5 $\mu$m-thick, 55%-porosity polyethylene polymer microporous film (purchased from Enjie New Materials Technology Co., Ltd.).

**Comparative Embodiment 2**

Identical to Embodiment 1-2 except that the positive electrode plate is prepared according to the following steps.

**<Preparing a positive electrode plate>**

Adding 2000 ml of deionized water into a 5 L reaction vessel, heating the vessel to 85 °C, and adding 200 grams of melamine ($C_3N_6H_6$) while stirring at a speed of 300 rpm. After the melamine is highly dispersed, continuing to stir for 30 min to obtain a highly dispersed melamine precursor solution. Adding 98 grams of pre-ground cyanuric acid powder. Controlling the temperature to remain at 85 °C, and stirring rapidly at 500 rpm for 15 minutes. Subsequently, adding 100 grams of cyanuric acid powder, and reacting at 95 °C for 30 minutes. Cooling the reactant to a room temperature, filtering the reactant to obtain a filter cake. Washing the filter cake 2 times with an equal weight of 79 °C deionized water. Spray-drying the filter cake to obtain a melamine cyanurate salt in the form of a white powder solid.
Mixing lithium cobalt oxide as a positive active material, conductive carbon black (Super P) as a conductive agent, and polyvinylidene fluoride (PVDF, with a weight-average molecular weight Mw of 530,000) as a binder at a mass ratio of 96 : 2.5 : 1.5, adding the mixture into N-methylpyrrolidone (NMP), and stirring well to form a positive electrode slurry in which the solid content is 70 wt%. Applying the positive electrode slurry evenly onto a surface of positive current collector aluminum foil on one side, and drying the foil in an 85 °C environment. Subsequently, repeating the above steps on a surface of the aluminum foil on the other side to obtain a semi-finished positive electrode plate coated with a positive electrode material layer on both sides. Subsequently, cold-pressing and cutting the electrode plate to obtain a semi-finished positive electrode plate of 74 mm $\times$ 867 mm in size.
Adding 3 kg of modified melamine cyanurate salt and 0.3 kg of polyvinylidene fluoride binder at a mass ratio of 10 : 1 in a 20 L dispersion tank, which amounts to 3.3 kg. Adding 11.7 kg of N-methylpyrrolidone (NMP), and dispersing and mixing well to obtain a coating slurry. Applying, in a gravure roller transfer coating manner, the slurry onto surfaces of the positive electrode material layer on two sides of the semi-finished positive electrode plate separately, the surfaces being away from the positive current collector; and drying the coating in an oven. The coating weight of the coating composition on both sides of the positive electrode plate is 6 mg/5000 mm$^2$.

**Comparative Embodiment 3**

Identical to Embodiment 1-2 except that the type of the modified melamine salt and the endothermic temperature difference $\Delta t$ are adjusted according to Table 1. $\Delta t$ is adjusted by adjusting the amount of the molecular modifier added during the preparation of the coating composition.
The preparation parameters and performance parameters of each embodiment and comparative embodiment are shown in Table 1 and Table 2.

Table 1

| | Type of modified melamine salt | Endothermic temperature difference $\Delta t$ (°C) | $s_l$ (g/g) | Residual mass percent after thermogravimetric weight loss w(%) | $D_{v50}$ (μm) | a (%) | High-temperature storage expansion rate (%) | Impact test pass rate (%) | Compressive force (N) |
|---|---|---|---|---|---|---|---|---|---|
| Embodiment 1-1 | Modified melamine polyphosphate salt | 40 | 0.01 | 32.4 | 0.5 | 91 | 5.1 | 100 | 1180 |
| Embodiment 1-2 | Modified melamine cyanurate salt | 40 | 0.01 | 14.97 | 0.5 | 91 | 5.1 | 100 | 1220 |
| Embodiment 1-3 | Modified melamine cyanurate salt | 5 | 0.01 | 4.56 | 0.5 | 91 | 5.5 | 80 | 1155 |
| Embodiment 1-4 | Modified melamine cyanurate salt | 10 | 0.01 | 6.78 | 0.5 | 91 | 5.6 | 80 | 1157 |
| Embodiment 1-5 | Modified melamine cyanurate salt | 15 | 0.01 | 8.88 | 0.5 | 91 | 5.8 | 90 | 1162 |
| Embodiment 1-6 | Modified melamine cyanurate salt | 50 | 0.01 | 16.32 | 0.5 | 91 | 6.0 | 100 | 1210 |
| Embodiment 1-7 | Modified melamine cyanurate salt | 60 | 0.01 | 18.11 | 0.5 | 91 | 7.2 | 100 | 1205 |
| Embodiment 1-8 | Modified melamine cyanurate salt | 65 | 0.01 | 19.23 | 0.5 | 91 | 8.3 | 90 | 1165 |
| Embodiment 1-9 | Modified melamine cyanurate salt | 100 | 0.01 | 21.24 | 0.5 | 91 | 9.1 | 90 | 1153 |
| Embodiment 1-10 | Modified melamine cyanurate salt | 40 | 0.20 | 14.97 | 0.5 | 91 | 13.2 | 100 | 1145 |
| Embodiment 1-11 | Modified melamine cyanurate salt | 40 | 0.09 | 14.97 | 0.5 | 91 | 12.1 | 100 | 1193 |
| Embodiment 1-12 | Modified melamine cyanurate salt | 40 | 0.06 | 14.97 | 0.5 | 91 | 11.1 | 100 | 1198 |
| Embodiment 1-13 | Modified melamine cyanurate salt | 40 | 0.02 | 14.97 | 0.5 | 91 | 9.9 | 100 | 1210 |

| | Type of modified melamine salt | Endothermic temperature difference Δt (°C) | $s_l$ (g/g) | Residual mass percent after thermogravimetric weight loss w(%) | $D_{v50}$ (μm) | a (%) | High-temperature storage expansion rate (%) | Impact test pass rate (%) | Compressive force (N) |
|---|---|---|---|---|---|---|---|---|---|
| Embodiment 1-14 | Modified melamine polyphosphate salt | 40 | 0.01 | 32.4 | 0.05 | 91 | 10.2 | 100 | 1060 |
| Embodiment 1-15 | Modified melamine polyphosphate salt | 40 | 0.01 | 32.4 | 0.1 | 91 | 9.9 | 100 | 1070 |
| Embodiment 1-16 | Modified melamine polyphosphate salt | 40 | 0.01 | 32.4 | 0.3 | 91 | 8.8 | 100 | 1100 |
| Embodiment 1-17 | Modified melamine polyphosphate salt | 40 | 0.01 | 32.4 | 0.7 | 91 | 5.4 | 100 | 1178 |
| Embodiment 1-18 | Modified melamine polyphosphate salt | 40 | 0.01 | 32.4 | 1.5 | 91 | 7.7 | 90 | 1175 |
| Embodiment 1-19 | Modified melamine polyphosphate salt | 40 | 0.01 | 32.4 | 3 | 91 | 9.9 | 80 | 1150 |
| Embodiment 1-20 | Modified melamine polyphosphate salt | 40 | 0.01 | 32.4 | 5 | 91 | 12.2 | 60 | 1110 |
| Embodiment 1-21 | Modified melamine polyphosphate salt | 40 | 0.01 | 32.4 | 0.5 | 45 | 9.9 | 60 | 1040 |
| Embodiment 1-22 | Modified melamine polyphosphate salt | 40 | 0.01 | 32.4 | 0.5 | 50 | 14.3 | 65 | 1060 |
| Embodiment 1-23 | Modified melamine polyphosphate salt | 40 | 0.01 | 32.4 | 0.5 | 70 | 11.1 | 80 | 1130 |
| Embodiment 1-24 | Modified melamine polyphosphate salt | 40 | 0.01 | 32.4 | 0.5 | 85 | 7.4 | 100 | 1150 |
| Embodiment 1-25 | Modified melamine polyphosphate salt | 40 | 0.01 | 32.4 | 0.5 | 90 | 5.3 | 100 | 1170 |
| Embodiment 1-26 | Modified melamine polyphosphate salt | 40 | 0.01 | 32.4 | 0.5 | 95 | 8.9 | 100 | 1160 |

(continued)

| | Type of modified melamine salt | Endothermic temperature difference $\Delta t$ (°C) | $s_l$ (g/g) | Residual mass percent after thermogravimetric weight loss w(%) | $D_{v50}$ ($\mu$m) | a (%) | High-temperature storage expansion rate (%) | Impact test pass rate (%) | Compressive force (N) |
|---|---|---|---|---|---|---|---|---|---|
| Embodiment 1-27 | Modified melamine polyphosphate salt | 40 | 0.01 | 32.4 | 0.5 | 99 | 11.4 | 90 | 1100 |
| Embodiment 1-28 | Modified melamine polyphosphate salt | 40 | 0.01 | 32.4 | 0.5 | 99.5 | 13.9 | 70 | 1040 |
| Embodiment 1-29 | Modified melamine polyphosphate salt (applied to a single side of positive electrode plate) | 40 | 0.01 | 32.4 | 0.5 | 91 | 7.8 | 75 | 1125 |
| Embodiment 1-30 | Modified melamine polyphosphate salt (applied to only separator) | 40 | 0.01 | 32.4 | 0.5 | 91 | 7.4 | 75 | 1115 |
| Comparative Embodiment 1 | / | / | / | / | / | / | 30.2 | 0 | 980 |
| Comparative Embodiment 2 | Unmodified melamine cyanurate salt | 0 | / | 0 | / | / | 15.5 | 45 | 1030 |
| Comparative Embodiment 3 | Modified melamine cyanurate salt | 120 | 0.01 | 2.41 | 0.5 | 91 | 20.2 | 50 | 1035 |

Note: "/" in Table 1 indicates absence of the corresponding preparation parameter or substance; the "a" in Embodiments 1-1 to 1-29 and Comparative Embodiment 3 in Table 1 is the mass percent of the modified melamine salt in the coating composition 1; and the "a" in Embodiment 1-30 is the mass percent of the modified melamine salt in the coating composition 2.

As can be seen from Embodiments 1-1 to 1-30 and Comparative Embodiments 1 to 3, the lithium-ion battery in an embodiment of this application contains a modified melamine salt, and the endothermic temperature difference $\Delta t$ between the modified melamine salt and the unmodified melamine salt is controlled to fall within the range of $5\,°C \leq \Delta t \leq 100$ °C, thereby endowing the lithium-ion battery with a lower high-temperature storage expansion rate and a relatively high impact test pass rate and can withstand a relatively high compressive force, indicating that the lithium-ion battery in an embodiment of this application exhibits superior high-temperature storage performance and mechanical safety performance. In contrast, the secondary battery in the comparative embodiment does not contain the modified melamine salt or the endothermic temperature difference $\Delta t$ between the modified melamine salt and the unmodified melamine salt does not fall within the range of $5\,°C \leq \Delta t \leq 100$ °C. Consequently, the lithium-ion battery in the comparative embodiment exhibits a higher high-temperature storage expansion rate and a relatively low impact test pass rate and withstands a relatively low compressive force, indicating that the lithium-ion battery in the comparative embodiment exhibits inferior high-temperature storage performance and safety performance.

The endothermic temperature difference $\Delta t$ between the modified melamine salt and the unmodified melamine salt usually affects the high-temperature storage performance and mechanical safety performance of a lithium-ion battery. As can be seen from Embodiments 1-2 to 1-9 and Comparative Embodiments 2 and 3, when the endothermic temperature difference $\Delta t$ between the modified melamine salt and the unmodified melamine salt is controlled to fall within the range specified herein, the lithium-ion battery is endowed with a relatively low high-temperature storage expansion rate and a relatively high impact test pass rate and can withstand a relatively high compressive force, indicating that the lithium-ion battery provided in this application exhibits superior high-temperature storage performance and mechanical safety performance.

The solubility $s_l$ of the modified melamine salt in the test electrolyte solution usually affects the high-temperature storage performance and the mechanical safety performance of a lithium-ion battery. As can be seen from Embodiment 1-2 and Embodiments 1-10 to 1-13, when the solubility $s_l$ of the modified melamine salt in the test electrolyte solution is controlled to fall within the range specified herein, the lithium-ion battery is endowed with a relatively low high-temperature storage expansion rate and also a relatively high impact test pass rate and can withstand a relatively high compressive force, indicating that the lithium-ion battery provided in this application exhibits superior high-temperature storage performance and mechanical safety performance.

The residual mass percent w after thermogravimetric weight loss of the modified melamine salt usually affects the high-temperature storage performance and mechanical safety performance of a lithium-ion battery. As can be seen from Embodiments 1-1 to 1-9, when the residual mass percent w after thermogravimetric weight loss of the modified melamine salt as characterized in a TG curve is controlled to fall within the range specified herein, the lithium-ion battery is endowed with a relatively low high-temperature storage expansion rate and a relatively high impact test pass rate and can withstand a relatively high compressive force, indicating that the lithium-ion battery provided in this application exhibits superior high-temperature storage performance and mechanical safety performance.

The particle diameter $D_{v50}$ of the modified melamine salt usually affects the high-temperature storage performance and the mechanical safety performance of a lithium-ion battery. As can be seen from Embodiment 1-1 and Embodiments 1-14 to 1-20, when the particle diameter $D_{v50}$ of the modified melamine salt is controlled to fall within the range specified herein, the lithium-ion battery is endowed with a relatively low high-temperature storage expansion rate and also a relatively high impact test pass rate and can withstand a relatively high compressive force, indicating that the lithium-ion battery provided in this application exhibits superior high-temperature storage performance and mechanical safety performance.

The mass percent a of the modified melamine salt based on the mass of the coating composition usually affects the high-temperature storage performance and mechanical safety performance of a lithium-ion battery. As can be seen from Embodiment 1-1 and Embodiments 1-21 to 1-28, when the mass percent a of the modified melamine salt is controlled to fall within the range specified herein, the lithium-ion battery is endowed with a relatively low high-temperature storage expansion rate and also a relatively high impact test pass rate and can withstand a relatively high compressive force, indicating that the lithium-ion battery provided in this application exhibits superior high-temperature storage performance and mechanical safety performance.

The position of the coating composition usually affects the high-temperature storage performance and the mechanical safety performance of a lithium-ion battery. As can be seen from Embodiment 1-1 and Embodiments 1-29 and 1-30, when the coating composition is applied at a position that falls within the range specified herein, the lithium-ion battery is endowed with a relatively low high-temperature storage expansion rate and also a relatively high impact test pass rate and can withstand a relatively high compressive force, indicating that the lithium-ion battery provided in this application exhibits superior high-temperature storage performance and mechanical safety performance.

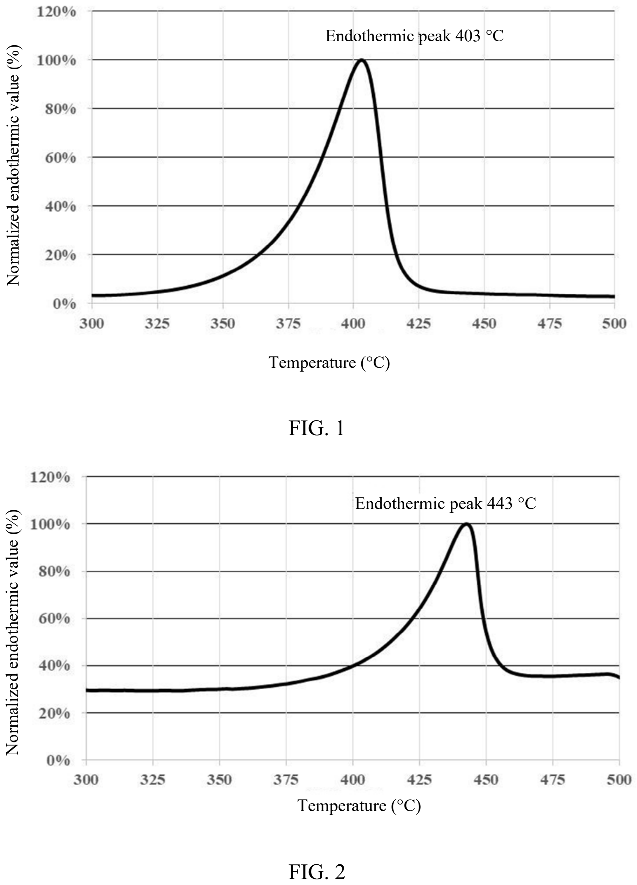

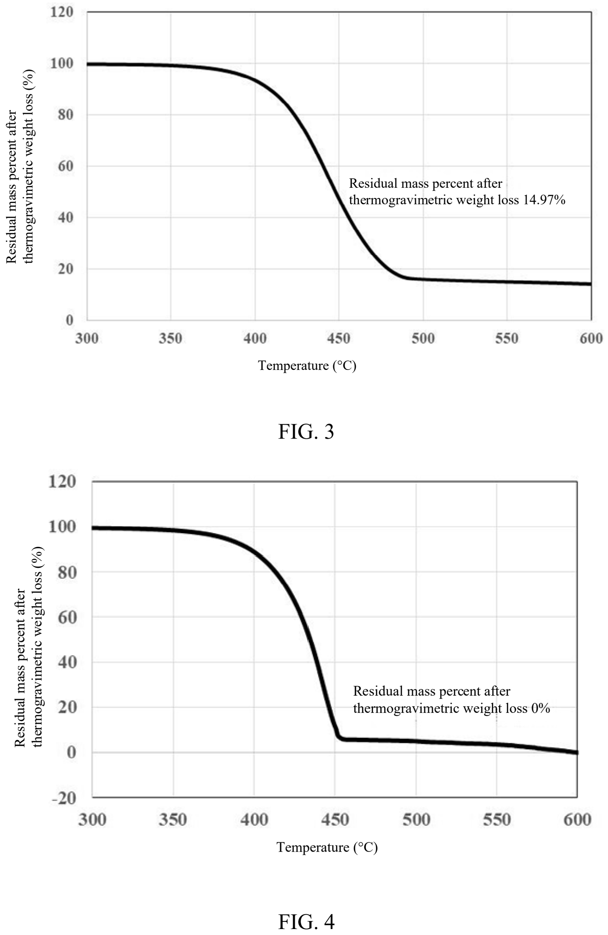

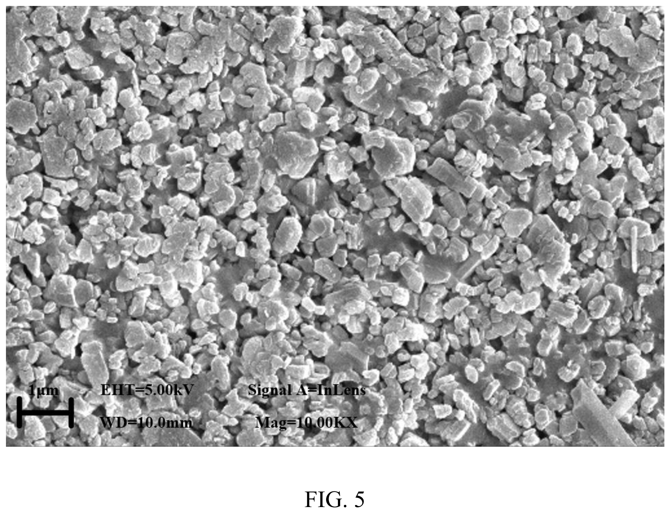

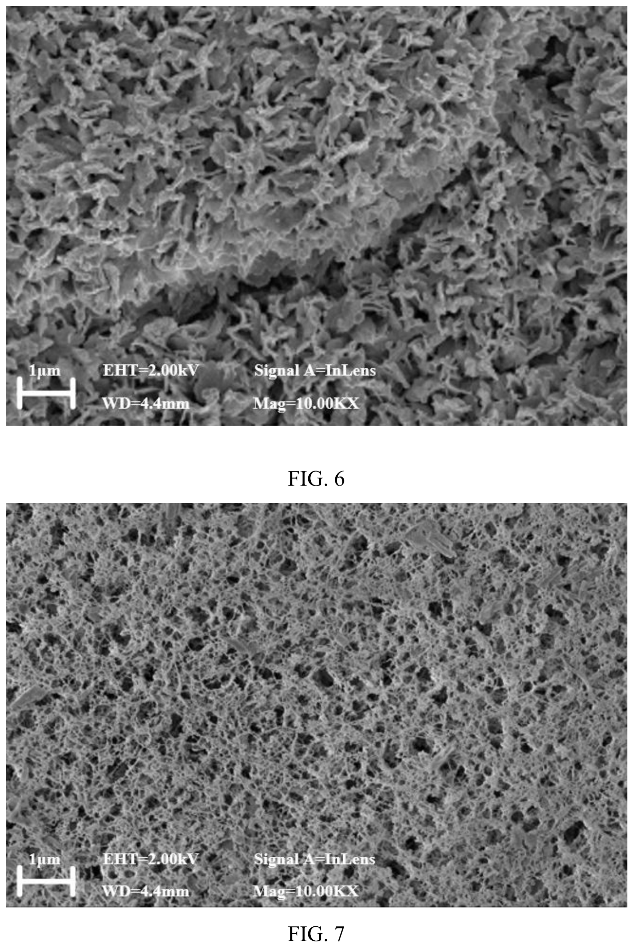

FIG. 1 is a DSC curve of a modified melamine cyanurate salt according to Embodiment 1-2 of this application. As can be seen, the peak temperature of the modified melamine cyanurate salt in Embodiment 1-2 is 403 °C. FIG. 2 is a DSC curve of an unmodified melamine cyanurate salt according to Comparative Embodiment 2 of this application. As can be seen, the peak temperature of the unmodified melamine cyanurate salt is 443 °C. Therefore, by comparing the peak temperatures between the modified melamine cyanurate salt and the unmodified melamine cyanurate salt, the endothermic temperature difference Δt between the two salts is calculated as 40 °C. FIG. 3 is a TG curve of a modified melamine cyanurate salt according to Embodiment 1-2 of this application, showing that a residual mass percent after thermogravimetric weight loss of the modified melamine cyanurate salt is 14.97%. FIG. 4 is a TG curve of an unmodified melamine cyanurate salt according to Comparative Embodiment 2 of this application, showing that a residual mass percent after thermogravimetric weight loss of the unmodified melamine cyanurate salt is 0%. FIG. 5 is a scanning electron microscope image of an unmodified melamine cyanurate salt according to Comparative Embodiment 2 of this application. As shown in FIG. 5, no carbonized region exists in the unmodified melamine polyphosphate salt. FIG. 6 is a scanning electron microscope image of a modified melamine cyanurate salt according to Embodiment 1-2 of this application. As can be seen from FIG. 6, a carbonized region appears in the modified melamine cyanurate salt. The carbonization product can maintain the coating structure, thereby reducing the probability of a short circuit between the positive electrode plate and the negative electrode plate caused by further contact. FIG. 7 is a scanning electron microscope image of the modified melamine cyanurate salt according to Embodiment 1-4 of this application. As can be seen from FIG. 7, a carbonized region appears in the modified melamine cyanurate salt. Compared with FIG. 6, the particle diameter of the carbonization product is smaller, indicating that the residual mass percent after thermogravimetric weight loss is lower.

**Table 2**

|  | Molecular modifier | Binder | b (%) | Endothermic temperature difference Δt (°C) | m | High-temperature storage expansion rate (%) | Impact test pass rate (%) | Compressive force (N) |
|---|---|---|---|---|---|---|---|---|
| Embodiment 1-1 | Glycerol | Polyvinylidene fluoride | 1 | 40 | 1 | 5.1 | 100 | 1180 |
| Embodiment 2-1 | Polyvinyl alcohol (with a weight-average molecular weight of 30,000) | Polyvinylidene fluoride | 1 | 40 | 1 | 5.2 | 100 | 1222 |
| Embodiment 2-2 | Ethylene glycol | Polyvinylidene fluoride | 1 | 40 | 1 | 5.1 | 100 | 1185 |
| Embodiment 2-3 | Ethylenediamine | Polyvinylidene fluoride | 1 | 40 | 1 | 6.5 | 100 | 1180 |
| Embodiment 2-4 | Glycerol | Styrene-butadiene rubber | 1 | 40 | 1 | 5.2 | 100 | 1183 |
| Embodiment 2-5 | Glycerol | Polyvinylidene fluoride | 0.05 | 5 | 1 | 7.2 | 60 | 1060 |
| Embodiment 2-6 | Glycerol | Polyvinylidene fluoride | 0.1 | 20 | 1 | 6.8 | 75 | 1104 |
| Embodiment 2-7 | Glycerol | Polyvinylidene fluoride | 0.5 | 35 | 1 | 5.5 | 90 | 1125 |
| Embodiment 2-8 | Glycerol | Polyvinylidene fluoride | 2.5 | 60 | 1 | 6.1 | 100 | 1120 |
| Embodiment 2-9 | Glycerol | Polyvinylidene fluoride | 5 | 80 | 1 | 6.7 | 100 | 1110 |
| Embodiment 2-10 | Glycerol | Polyvinylidene fluoride | 15 | 100 | 1 | 8.2 | 85 | 1106 |
| Embodiment 2-11 | Polyvinyl alcohol (with a weight-average molecular weight of 30,000) | Polyvinylidene fluoride | 1 | 40 | 0 | 5 | 100 | 1230 |

(continued)

| | Molecular modifier | Binder | b (%) | Endothermic temperature difference Δt (°C) | m | High-temperature storage expansion rate (%) | Impact test pass rate (%) | Compressive force (N) |
|---|---|---|---|---|---|---|---|---|
| Embodiment 2-12 | Polyvinyl alcohol (with a weight-average molecular weight of 30,000) | Polyvinylidene fluoride | 1 | 40 | 0.5 | 5 | 100 | 1223 |
| Embodiment 2-13 | Polyvinyl alcohol (with a weight-average molecular weight of 30,000) | Polyvinylidene fluoride | 1 | 40 | 1.5 | 5.3 | 100 | 1218 |
| Embodiment 2-14 | Polyvinyl alcohol (with a weight-average molecular weight of 30,000) | Polyvinylidene fluoride | 1 | 40 | 2.5 | 6.7 | 100 | 1201 |
| Embodiment 2-15 | Polyvinyl alcohol (with a weight-average molecular weight of 30,000) | Polyvinylidene fluoride | 1 | 40 | 4 | 12.2 | 80 | 1143 |
| Embodiment 2-16 | Polyvinyl alcohol (with a weight-average molecular weight of 30,000) | Polyvinylidene fluoride | 1 | 40 | 5 | 13.4 | 70 | 1088 |

When the modified melamine salt is prepared by introducing a molecular modifier during reaction between the melamine and the inorganic or organic acid, the type of the molecular modifier usually affects the high-temperature storage performance and the mechanical safety performance of a lithium-ion battery. As can be seen from Embodiment 1-1 and Embodiments 2-1 to 2-3, when the type of the molecular modifier is controlled to fall within the range specified herein, the lithium-ion battery is endowed with a relatively low high-temperature storage expansion rate and also a relatively high impact test pass rate and can withstand a relatively high compressive force, indicating that the lithium-ion battery provided in this application exhibits superior high-temperature storage performance and mechanical safety performance.

The coating composition includes a modified melamine salt and a binder. The type of the binder usually affects the high-temperature storage performance and the mechanical safety performance of a lithium-ion battery. As can be seen from Embodiments 1-1 and 2-4, when the type of the binder in the coating composition is controlled to fall within the range specified herein, the lithium-ion battery is endowed with a relatively low high-temperature storage expansion rate and also a relatively high impact test pass rate and can withstand a relatively high compressive force, indicating that the lithium-ion battery provided in this application exhibits superior high-temperature storage performance and mechanical safety performance.

The mass percent b of the molecular modifier based on the total mass of the modified melamine salt usually affects the high-temperature storage performance and the mechanical safety performance of a lithium-ion battery. As can be seen from Embodiment 1-1 and Embodiments 2-5 to 2-10, when the mass percent b of the molecular modifier is controlled to fall within the range specified herein, the lithium-ion battery is endowed with a relatively low high-temperature storage expansion rate and also a relatively high impact test pass rate and can withstand a relatively high compressive force, indicating that the lithium-ion battery in an embodiment of this application exhibits superior high-temperature storage performance and mechanical safety performance.

The absolute value m of the pH difference between the modified melamine salt and the binder usually affects the high-temperature storage performance and the mechanical safety performance of a lithium-ion battery. As can be seen from Embodiment 2-1 and Embodiments 2-11 to 2-16, when the absolute value m of the pH difference between the modified melamine salt and the binder is controlled to fall within the range specified herein, the lithium-ion battery is endowed with a relatively low high-temperature storage expansion rate and also a relatively high impact test pass rate and can withstand a relatively high compressive force, indicating that the lithium-ion battery in an embodiment of this application exhibits superior high-temperature storage performance and mechanical safety performance.

It is hereby noted that, as used herein, the terms "include", "comprise", and any variations thereof are intended to cover a non-exclusive inclusion relationship, whereby a process, method, item, or device that includes a series of elements not only includes such elements, but also includes other elements not expressly specified or also includes inherent elements of the process, method, item, or device.

Different embodiments of this application are described in a correlative manner. For the same or similar part in one embodiment, reference may be made to another embodiment. Each embodiment focuses on differences from other embodiments.

Described above are merely preferred embodiments of this application that are not intended to limit this application. Any modifications, equivalent replacements, improvements, and the like made without departing from the concept and principles of this application still fall within the protection scope of this application.

## Claims

1. A coating composition, comprising a modified melamine salt and a binder, wherein an endothermic temperature of the modified melamine salt is lower than an endothermic temperature of an unmodified melamine salt as **characterized by** a differential scanning calorimetry curve, and a difference between the endothermic temperature of the modified melamine salt and the endothermic temperature of the unmodified melamine salt is $\Delta t$ °C, $5 \leq \Delta t \leq 100$.

2. The coating composition according to claim 1, wherein $15 \leq \Delta t \leq 60$.

3. The coating composition according to claim 1, wherein a solubility of the modified melamine salt in a test electrolyte solution is $s_l$ g/g, and $s_1$ is less than 0.1.

4. The coating composition according to claim 3, wherein $s_1 \leq 0.02$.

5. The coating composition according to claim 1, wherein a residual mass percentage after thermogravimetric weight loss of the modified melamine salt as **characterized by** a thermogravimetric analysis curve is w%, satisfying: $1 \leq w \leq 35$, preferably, $4.56 \leq w \leq 33$.

6. The coating composition according to claim 1, wherein a particle diameter of the modified melamine salt is $D_{v50}$ $\mu$m, satisfying: $0.1 \leq D_{v50} \leq 3.0$, preferably, $0.3 \leq D_{v50} \leq 1.5$.

7. The coating composition according to claim 1, wherein, based on a mass of the coating composition, a mass percentage of the modified melamine salt is a%, satisfying: $50 \leq a \leq 99$, preferably, $70 \leq a \leq 95$.

8. The coating composition according to claim 1, wherein the binder comprises at least one of polyacrylic acid, polyacrylate ester, polyvinylidene fluoride, styrene-butadiene rubber, sodium carboxymethyl cellulose, polyvinyl alcohol, polyimide, or aluminum hydroxide sol.

9. The coating composition according to claim 1, wherein the modified melamine salt is obtained by introducing a molecular modifier during reaction of melamine with an inorganic acid or an organic acid, and the molecular modifier contains a plurality of hydroxyl groups or a plurality of amino groups.

10. The coating composition according to claim 9, wherein the molecular modifier comprises a polyhydroxyl polymer polymerized from a small-molecule compound, and the polyhydroxyl polymer comprises at least one of polyvinyl alcohol, polyethylene glycol, or polymeric polyol; and/or

   the molecular modifier comprises a polyhydroxy compound or a polyamino compound;
   the polyhydroxy compound comprises at least one of ethylene glycol, propylene glycol, glycerol, butylene glycol, hexylene glycol, pentaerythritol, ethylenediaminetetraacetic acid, trimethylolethane, xylitol, or sorbitol; and the polyamino compound comprises at least one of ethylenediamine or hexamethylenetetramine; and/or
   the inorganic acid comprises at least one of phosphoric acid, pyrophosphoric acid, or boric acid; and the organic acid comprises at least one of cyanuric acid, phthalic acid, oxalic acid, phytic acid, or 2-carboxyethylphenylphosphinic acid; and/or

based on a total mass of the modified melamine salt, a mass percentage of the molecular modifier is b%, satisfying: $0.1 \leq b \leq 15.0$.

11. The coating composition according to claim 10, wherein $0.5 \leq b \leq 5.0$.

12. The coating composition according to claim 1, wherein an absolute value of a pH difference between the modified melamine salt and the binder is m, satisfying: $0 \leq m \leq 5.0$.

13. The coating composition according to claim 12, wherein $0 \leq m \leq 2.5$.

14. An electrochemical device, wherein the electrochemical device comprises the coating composition according to any one of claims 1 to 13; and

the electrochemical device comprises a positive electrode plate and a separator, the coating composition is disposed on a surface of the separator, the surface facing the positive electrode plate, and/or on at least one surface of the positive electrode plate.

15. An electronic device, wherein the electronic device comprises the electrochemical device according to claim 14.

FIG. 1

FIG. 2

FIG. 3

FIG. 4

FIG. 5

FIG. 6

FIG. 7